(19) Europäisches Patentamt
European Patent Office
Office européen des brevets

(11) EP 4 063 930 A1

# (12) EUROPEAN PATENT APPLICATION

(43) Date of publication:
**28.09.2022 Bulletin 2022/39**

(21) Application number: **21217842.0**

(22) Date of filing: **27.12.2021**

(51) International Patent Classification (IPC):
***G02B 9/04*** $^{(2006.01)}$

(52) Cooperative Patent Classification (CPC):
**G02B 9/64; G02B 13/18; G03B 35/08; H04N 13/239;** G02B 13/04

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.01.2021 JP 2021008912**

(71) Applicant: **Ricoh Company, Ltd.**
**Tokyo 143-8555 (JP)**

(72) Inventor: **YOKOYAMA, Yukihisa**
**Tokyo, 143-8555 (JP)**

(74) Representative: **SSM Sandmair Patentanwälte Rechtsanwalt Partnerschaft mbB**
**Joseph-Wild-Straße 20**
**81829 München (DE)**

## (54) IMAGE-CAPTURING OPTICAL SYSTEM, CAMERA INCORPORATING THE SAME, AND STEREO CAMERA INCORPORATING THE SAME

(57) An image-capturing optical system (1) includes an aperture stop (S); a first lens group (G1) closer to an object than the aperture stop (S) and composed of multiple glass lenses (L1, L2, L3) including a meniscus lens (L1) having a negative power closest to the object within the first lens group (G1); and a second lens group (G2) closer to an image than the aperture stop (S) and composed of: a first plastic lens (L4); a second plastic lens (L5) adjacent to the first plastic lens (L4) and closer to the image than the first plastic lens (L4), the second plastic lens (L5) having a surface facing the image, in which curvature is positive in vicinity of the optical axis and an absolute value of the curvature increases within a range from the vicinity of the optical axis to an off-axis area of the surface; and one or more glass lenses (L6) including a glass lens having positive power closest to the image within the second lens group (G2).

FIG. 1

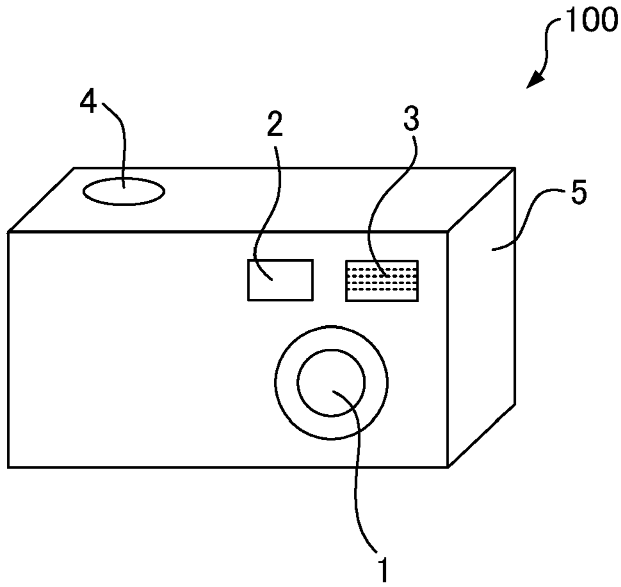


EP 4 063 930 A1

## Description

BACKGROUND

Technical Field

The present disclosure relates to an image-capturing optical system, a camera incorporating the same, and a stereo camera incorporating the same.

Related Art

Many camera apparatuses that include an image-capturing optical system and an area sensor, such as a monitoring camera for sensing and an on-vehicle camera to identify an object and measure a distance to the object, are hitherto in practical use and demands for such camera apparatuses increase.

Particularly in a stereo camera using a pair of cameras, the pixel block that correlates with a pixel block in an image captured by one of the pair of cameras is identified within an image captured by the other one of the pair of the cameras, and distance data is accurately obtained based on the principle of triangulation using a disparity, or relative difference between these two images. Such a stereo camera has been recently attracting attention.

Further, a sensing camera is to have high resolution to allow identification of a relatively small object or observation of a relatively far situation, have a wide angle of view to allow observation of wider ranges, and provide temperature compensation for stably exhibiting performance under various environmental conditions.

Moreover, image-capturing optical systems that use plastic lenses reduced in cost and weight through quantity production have been in practical use in recent years.

Plastic lenses, however, typically have a disadvantage of failing to have stable characteristics in a wide temperature range in accordance with the properties thereof. In particular, stereo cameras are to have less deterioration in accuracy of identification and determination of a position of a target object due to a decrease in resolution and also have less distance measurement error caused by a difference in image position. To achieves such stereo cameras, variations in focal position and angle of view with changes in ambient temperature is to be optically reduced.

For example, Japanese Unexamined Patent Application Publication No. 2014-089349 and Japanese Unexamined Patent Application Publication No. 2018-097150 disclose techniques for temperature compensation of imaging optical systems using plastic lenses.

Image-capturing optical systems using a plastic lens, as compared to those using a glass lens, face difficulties in forming an antireflection film with a high transmittance thereon and in maintaining brightness and color balances because of higher light absorptions particularly at short-wavelengths and more likeliness to deteriorate with time caused by the influence of its weather resistance.

In view of such circumstances, there are some cases where a limited number of plastic lenses is used under dark environment or environment under which a color tone is identified. However, reducing the number of plastic lenses causes reduced latitude in power balance between multiple plastic lenses, which serves to cancel the influence of temperature changes. Because of such a fact, reducing variations in both focal position and angle of view has been a challenge.

However, none of known optical systems deal with temperature compensation for a variation in angle of view in addition to temperature compensation for a variation in focal position along the optical axis (i.e., out of focus).

A typical configuration uses a plastic lens whose variations with changes in temperature are reduced to approximately 25 micrometers ($\mu$m) in terms of 100°C. This reduced value still fails to satisfy a desired reduced value of approximately several $\mu$m or less to achieve an intended accurate of detection by an on-vehicle camera for sensing (more accuracy is to be obtained).

SUMMARY

In view of the foregoing, an object of the present disclosure is to provide an image-capturing optical system using both a plastic lens and a glass lens, which is lightweight and insusceptible to changes in environmental temperature to allow less variable image quality.

In order to achieve the above-described object, there is provided an image-capturing optical system includes an aperture stop; a first lens group closer to an object than the aperture stop and composed of multiple glass lenses including a meniscus lens having a negative power closest to the object within the first lens group; and a second lens group closer to an image than the aperture stop and composed of: a first plastic lens; a second plastic lens adjacent to the first plastic lens and closer to the image than the first plastic lens, the second plastic lens having a surface facing the image, in which curvature is positive in vicinity of the optical axis and an absolute value of the curvature increases within a range from the vicinity of the optical axis to an off-axis area of the surface; and one or more glass lenses including a glass lens having positive power closest to the image within the second lens group. Advantageous embodiments are defined by the dependent claims.

Embodiments of the present disclosure provides an image-capturing optical system using both a plastic lens and a glass lens, which is lightweight and insusceptible to changes in environmental temperature to allow less variable image quality.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

FIG. 1 is an illustration of a camera mounted with an image-capturing optical system according to an embodiment;
FIG. 2 is a rear view of the camera in FIG. 1;
FIG. 3 is a block diagram of a controller of the camera in FIG. 1;
FIG. 4 is a cross-sectional view of an image-capturing optical system according to Numerical Example 1 to describe its lens configuration;
FIG. 5 is an illustration of a direction in which distortion changes at high temperatures with an arrangement of a positive lens and a negative lens according to a comparative example;
FIG. 6 is an illustration of a direction in which distortion changes at high temperatures with an arrangement of a positive lens and a negative lens according to an embodiment of the present invention;
FIG. 7 is an illustration of a variation in focal position in the vicinity of the optical axis and the degree and direction of a change in distortion at the off-axis area at high temperatures in the image-capturing optical system according to an embodiment;
FIG. 8 is a graph of a change in curvature from the optical axis to the off-axis area of an image-side surface of a second plastic lens in an image-capturing optical system according to Numerical Example 1;
FIG. 9 is an illustration a fit-and-held structure in which lenses are fit and held together, according to an embodiment;
FIG. 10 is a collection of a spherical aberration diagram, a field curvature diagram, and a distortion diagram with the image-capturing optical system according to Numerical Example 1;
FIG. 11 is a graph with an MTF curve indicating variations in central image height with temperature in the image-capturing optical system according to Numerical Example 1;
FIG. 12 is a graph for describing a variation in angle of view at a temperature change of a ray that reaches each image height of the image-capturing optical system according to Numerical Example 1;
FIG. 13 is a cross-sectional view of a lens configuration of an image-capturing optical system according to Numerical Example 2;
FIG. 14 is a graph of a change in curvature from the optical axis to the off-axis area of an image-side surface of a second plastic lens in an image-capturing optical system according to Numerical Example 2;
FIG. 15 is a collection of a spherical aberration diagram, a field curvature diagram, and a distortion diagram with the image-capturing optical system according to Numerical Example 2;
FIG. 16 is a graph with an MTF curve indicating variations in central image height with temperature in the image-capturing optical system according to Numerical Example 2;
FIG. 17 is a graph for describing a variation in angle of view at a temperature change of a ray that reaches each image height of the image-capturing optical system according to Numerical Example 2;
FIG. 18 is a cross-sectional view of a lens configuration of an image-capturing optical system according to Numerical Example 3;
FIG. 19 is a graph of a change in curvature from the optical axis to the off-axis area of an image-side surface of a second plastic lens in an image-capturing optical system according to Numerical Example 3;
FIG. 20 is a collection of a spherical aberration diagram, a field curvature diagram, and a distortion diagram with the image-capturing optical system according to Numerical Example 3;
FIG. 21 is a graph with an MTF curve indicating variations in central image height with temperature in the image-capturing optical system according to Numerical Example 3;
FIG. 22 is a graph for describing a variation in angle of view at a temperature change of a ray that reaches each image height of the image-capturing optical system according to Numerical Example 3;
FIG. 23 is an illustration of a configuration of a stereo camera incorporating the imaging optical system according to an embodiment of the present disclosure; and
FIG. 24 illustrates the principle of triangulation to measure the distance to an object using the stereo camera in FIG. 23.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Referring now to the drawings, embodiments of the present disclosure are described below. As used herein, the singular forms "a," "an," and "the" are intended to include the plural forms as well, unless the context clearly indicates otherwise.

Some embodiments of the present disclosure are described below with reference to the drawings. In the description of the embodiments, like reference signs are given to elements having similar functionality or configuration, and overlapping description may be omitted where appropriate. The drawings may be simplified or partially omitted to aid the understanding of a particular configuration.

The image-capturing optical system according to an embodiment is applicable in, for example, a camera for sensing, such as a monitoring camera or an on-vehicle camera, or a stereo camera. Such an image-capturing optical system features as follows.

In the following description of the embodiments of the present disclosure, a direction from the object side toward the image side is defined as a positive direction, a direction from the image side toward the object side is defined as a negative direction.

FIGs. 1 and 2 are illustrations of a digital camera 100 as a camera according to an embodiment of the present invention.

FIG. 1 is an illustration of the appearance of the digital camera 100 as viewed from the front side, which is the object side.

FIG. 2 is an illustration of the appearance of the digital camera 100 as viewed from the back side, which is the image side.

Although the digital camera 100 is an example of the camera incorporating the image-capturing optical system according to the present embodiment, other examples of the camera may include a silver halide film camera using a silver halide film as an image recording medium, an in-vehicle camera, and a monitoring camera, all of which involve high resolution, low distortion, a wide angle of view, and a large aperture.

In addition, the image-capturing optical system according to an embodiment may be incorporated in a camera attached to a portable information terminal device such as a personal data assistant (PDA), a mobile phone, a smartphone, and a tablet terminal. Alternatively, the image-capturing optical system according to an embodiment may be incorporated in a camera for sensing.

The digital camera 100 includes a casing 5 as a camera body, an image-capturing optical system 1 including multiple lenses, an optical viewfinder 2 (viewfinder in FIG. 3), an electronic flash (or a strobe) 3, a shutter button 4, a power switch 6, a liquid crystal display 7 (or LCD monitor), operation buttons 8, and a memory card slot 9.

As illustrated in FIG. 3, the digital camera 100 includes a central processing unit (CPU) 11 of the controller, an image processor 12, a photosensor 13 as an image sensor, a signal processor 14, a semiconductor memory 15, and a communication card 16, which are all inside the casing 5.

The digital camera 100 forms an image with light incident through the image-capturing optical system 1 on the photosensor 13 as the image sensor and reads an optical image of an object by the photosensor 13.

The optical image of the object read by the photosensor 13 is processed by a signal processor 14 as appropriate under control of the CPU 11, to be converted into digital image information. The image processor 12 performs prescribed image processing on the digital image information, and the semiconductor memory 15 as a memory (e.g., a nonvolatile memory) stores the processed image data therein.

Examples of the memory or storage medium that stores such images include, in addition to the semiconductor memory 15, a communication card 16 used to transmit stored images to an external information processing terminal, and a memory card inserted into the memory card slot 9.

The liquid crystal display 7 displays image data captured or image data recorded in the semiconductor memory 15. The liquid crystal display 7 also displays changes in settings of, for example, image processing according to operations via the operation buttons 8.

The liquid crystal display 7, which is used as a display device in the present embodiment, may be an organic electro luminescence (EL) display, or another display device.

The image-capturing optical system 1 is composed of multiple lenses, in which a lens closest to the object (at the front) is covered with a lens barrier of the casing 5 when the digital camera 100 is carried.

In the present embodiment, at power-on according to an operation input by the operator via the power switch 6, the lens barrier opens to allow the objective surface of the lens closest to the object in the image-capturing optical system 1 to be exposed.

For example, the semiconductor memory 15 and the communication card 16 are used upon being installed in a dedicated slot such as a memory card slot 9 or a general-purpose slot such as a communication card slot.

The following describes the image-capturing optical system 1 of the digital camera 100.

In the present embodiment, the image-capturing optical system 1 in FIG. 4 includes a first lens group G1 composes of multiple lenses L1, L2, and L3, and a second lens group G2 composed of lenses L4, L5, and L6.

The image-capturing optical system 1 further includes an aperture stop S between the first lens group G1 and the second lens group G2. The image-capturing optical system 1 forms an image on a designed image plane IMG indicated as an imaging position.

In the image-capturing optical system 1 according to the present embodiment, filter glasses are disposed between the second lens group G2 and the image plane IMG. The filter glasses represent various filters, such as an optical low-pass filter, an infrared-cut filter, and an ultraviolet-cut filter; and a cover glass (seal glass) for the photosensor 13.

In an image-capturing optical system using a solid-state image sensor, such as a charge-coupled device (CCD) sensor or a complementary metal-oxide semiconductor (CMOS) sensor, at least one of a back insertion glass, a low-pass filter, a cut filter, a cover glass that protects a light receiving surface of the solid-state image sensor and other elements is inserted.

These optical filters are illustrated in FIG. 4 as a first optical filter F1 and a second optical filter F2 as two parallel flat plates.

However, the configuration of the optical filters (the presence or absence of the optical filters to be inserted, or the number of optical filters) is not limited to FIG. 4, and changeable as appropriate according to the optical design.

The digital camera 100 is to be developed to have a higher resolution, a wider angle of view, a larger diameter of aperture, and a reduction in weight and cost.

The digital camera 100 further simultaneously involves high resolution to allow identification of a relatively small object or observation of a relatively far situation; a wide angle of view to allow sensing of a wide range; a large diameter of aperture to allow proper imaging and recognition even in a dark environment such as during night; compactness and lightweight to increase the latitude in installation; and low costs to provide these values.

In addition, the digital camera 100 also involves functional stability in various use environments, and a reduction in: changes in resolution due to out of focus during temperature changes (environment changes); variations in image height during temperature changes; or variations in angle of view, in view of optical designs.

In this case, variations in angle of view represent a phenomenon in which the angle of view of a ray that reaches the same image height on a sensor varies before and after a temperature change. Variations in image height represent a phenomenon in which the image height on the sensor of a ray that reaches the sensor at the same angle of view varies before and after a temperature change. The phenomena are substantially equivalent to each other.

To achieve wider angles of view in a typical image-capturing optical system, the typical image-capturing optical system is to have a significant negative distortion to guide light rays incident thereon at wide angles of view to the imaging plane.

However, widening angles of view more likely increases coma aberration, astigmatism, field curvature, and other aberrations, which involves simultaneous correction of these aberrations.

In the image-capturing optical system, distortion occurs in a positive direction (hereinafter, referred to as over-correction side or in a direction of over-correction) when a lens having a positive power is disposed closer to the object than the aperture stop, whereas distortion occurs in a negative direction (hereinafter, referred to as under-correction side or in a direction of under-correction) when a lens having a negative power is disposed closer to the object than the aperture stop.

Further, the relation between the direction of distortion and the lens power is reversed for a lens closer to the image than the aperture stop: a lens having a positive power closer to the image than the aperture stop causes distortion at the under-correction side, whereas a lens having a negative power closer to the image than the aperture stop causes distortion at the over-correction side.

The over-correction side (or distortion that occurs in the direction of over-correction) refers to a direction in which an image is shaped of a pincushion, and the under-correction side refers to a direction in which an image is shaped of a barrel shape.

The image-capturing optical system 1 according to the present embodiment includes a meniscus lens having a negative power and disposed closest to the object within the first lens group G1. This configuration allows light rays at wide angles of view to be captured and causes distortion at the under-correction side, which enables a wider angle of view of the image-capturing optical system 1.

Further, the image-capturing optical system 1 further includes a lens L6 having a positive power closest to the image within the second lens group G2. This configuration cancels out field curvature generated by the meniscus lens having negative power in the first lens group G1 while further generating negative distortion (i.e., distortion at the under-correction side).

In the image-capturing optical system 1 according to the present embodiment, the lens L1 closest to the object and the lens L6 closest to the image, which are distant from the aperture stop S, significantly contribute to generation of negative distortion to achieve wider angles of view. Further, the lens having positive power closest to the image serves to reduce an incident angle with respect to the imaging plane. Reduced incident angles with respect to the imaging plane enables a reduction in shift of the image height at which a ray arrives at the imaging plane, with respect to the shift of the imaging plane along the optical axis, and thus further reduces variations in angle of view during temperature changes (i.e., environment changes), which is to be described later. The image-capturing optical system 1 according to the present embodiment includes an aspherical lens in the second lens group G2 enables a reduction in spherical aberration and coma aberration while achieving a better balance in image height between field curvature and distortion. In the aspherical shape, displacement X along the optical axis is given by Expression (1) below: [Expression 1]

$$X = \frac{(H^2/R)}{1+\sqrt{1-(1+k)(H/R)^2}} + \sum A_i \cdot H^i \quad \cdots \quad (1)$$

In this case, the local curvature c at a certain lens height H is typically given by the Expression (2) below: [Expression 2]

$$c = \frac{X''}{\left(1+X'^2\right)^{3/2}} \quad \cdots \quad (2)$$

In Expression (1), H is a lens height from the optical axis with respect to a surface vertex, R is a radius of curvature at the surface vertex, k is a conical constant, and Ai is an aspherical coefficient with respect to an order i,

In Expression (2), X' is an amount obtained by differentiating the displacement X in Expression (1) along the optical axis with respect to the lens height H by first-order derivation, and X" is an amount obtained by differentiating the displacement X in Expression (2) along the optical axis with respect to the lens height H by second-order derivation.

At any surface on the object side and the image side, c is positive in the case of a convex surface shape facing the object side and c is negative in the case of a concave surface shape facing the object side.

In other words, when the local curvature c of the object-side surface is positive, the object-side surface has positive power. When the local curvature c of the image-side surface is positive, the image-side surface has negative power.

In the image-capturing optical system 1 according to the present embodiment, the lens L1 closest to the object and the lens L6 closest to the image, which are distant from the aperture stop S, significantly contribute to generation of negative distortion to achieve wider angles of view.

This arrangement enables successful imaging performance due to correction of various aberrations while achieving wider angles of view by generating significant negative distortion.

The above-described configuration or a portion of the configuration uses a plastic lens. Plastic lenses are typically more advantageous than glass lenses in low cost and light weight. However, plastic lenses may not have stable characteristics in a wide temperature range. More specifically, plastic lenses have relatively larger coefficients of linear expansion and temperature coefficients of refractive indices than those of glass lenses, and hence the plastic lenses have large changes in RDN with a temperature change (environment change), and performance thereof is likely deteriorated.

In particular, for a camera for sensing, if the focal point largely varies due to a change in RDN, resolution might deteriorate, causing deterioration in the accuracy of identification and determination of a position of a target object. Similarly, if the angle of view fluctuates due to a change in the RDN, an error occurs in the distance estimation due to deterioration in the accuracy of determination of a position of a target object. In view of such circumstances, an optical system that cancels out the variation in focal position and the variation in angle of view due to temperature changes is desired.

The following describes comparison between a comparative example using a plastic lens and an embodiment of the present disclosure using a plastic lens.

FIG. 5 is an aberration diagram of distortion, which is influenced by changes in refraction of a principal ray of an off-axis ray at high temperatures when each of the first lens group and the second lens group includes one plastic lens. FIG. 6 is an aberration diagram of distortion, which is influenced by changes in refraction of a principal ray of an off-axis ray at high temperatures when the second lens group includes two plastic lenses. In either case, two plastic lenses are assumed to be a positive lens and a negative lens to cancel out variations in focal position with temperature change.

As described above, since plastic lenses have relatively larger coefficients of linear expansion and temperature coefficients of refractive indices than those of glass lenses, for example, in a high temperature environment, the curvature and refractive index of a plastic lens markedly decrease, and either of positive and negative powers is weakened.

In other words, decreasing positive power of the positive lens within the first lens group G1 causes rays passing or passed through the positive lens to be refracted more in divergent direction, causing distortion of light rays reaching the imaging plane to shift in the direction of under-correction. Decreasing negative power of the negative lens within the first lens group G1 causes rays passing or passed through the negative lens to be refracted more in a converging direction, causing distortion of light rays reaching the imaging plane to shift in the direction of over-correction.

In other words, decreasing positive power of the positive lens within the second lens group G2 causes rays passing or passed through the positive lens to be refracted more in divergent direction, causing distortion of light rays reaching the imaging plane to shift in the direction of over-correction. Decreasing negative power of the negative lens within the second lens group G2 causes rays passing or passed through the negative lens to be refracted more in a converging direction, causing distortion of light rays reaching the imaging plane to shift in the direction of under-correction.

In the configuration in FIG. 5, distortion is shifted, or changed in the direction of over-correction, which is caused by synergy between the shift of the distortion caused by the negative lens of the first lens group G1 in the direction of over-correction and the shift of the distortion caused by the positive lens of the second lens group G2 in the direction of over-correction at high temperatures. Even in a case where the positive and negative lenses are interchanged and a positive lens is disposed in the first lens group G1, and a negative lens is disposed in the second lens group G2, distortion is shifted, or changed in the direction of under-correction by synergy between the shift of the distortion caused by the positive lens of the first lens group G1 in the direction of under-correction and the shift of the distortion caused by the negative lens of the second lens group G2 in the direction of under-correction at high temperatures. In the configuration in FIG. 5, the aperture stop S is between a plastic lens having positive or negative power in the first lens group G1 and another plastic lens having the opposite power of the plastic lens in the first lens group G1, in the second lens group G2 to cancel out a variation in focal position. This configuration according to the comparative example might deteriorate a variation in angle of view because a change in distortion is a change in image height that rays reach in the imaging plane, which is a variation in angle of view.

The configuration according to the comparative example has difficulties in a reduction in both variation in focal position and variation in angle of view with temperature.

The configuration in FIG. 6, however, cancels out distortion by changing the distortion in the opposite directions using the shift of the distortion caused by the positive lens of the G2 in the direction of over-correction and the shift of the distortion caused by the negative lens of the second lens group G2 in the direction of under-correction at high temperatures. Even when the positions of the positive lens and the negative lens are interchanged, the above-described relation that cancels out the distortion is similarly established.

Such a configuration according to the present embodiment enables a reduction in both a variation in focal position and a variation in angle of view with temperature. For arrangement of two plastic lenses having negative power and positive power in the first lens group G1, this arrangement also cancels out distortion due to high temperature by changing the distortion in the opposite directions.

In the first lens group G1, however, the negative lens is to serve to capture rays at wide angles of view, whereas the positive lens is to serve to correct significant astigmatism and field curvature caused by capturing rays while allowing the captured rays to form an image onto the imaging plane.

This configuration in which two negative and positive plastic lenses are arranged in the first lens group G1 has difficulties in design to enable desired adjustment of distortion while serving as described above. In other words, two plastic lenses are to be disposed in the second lens group G2 as illustrated in FIG. 6.

As described above, the image-capturing optical system 1 according to an embodiment is composed of an aperture stop S, a first lens group G1 closer to an object than the aperture stop S, and a second lens group G2 closer to an image than the aperture stop S. The second lens group G2 has two plastic lenses.

In the following description, one of the two plastic lenses, which is closer to the object, is referred to as a first plastic lens, and the other one of the two plastic lenses, which is closer to the image, is referred to as a second plastic lens.

In the present embodiment, as illustrated in FIG. 4, the negative glass lens L1 closest to the object within the first lens group G1 and the positive glass lens L6 closest to the image within the second lens group G2 cause significant negative distortion.

In this case using the glass lenses, distortion changes (shifts) with temperature to increase in the direction of over-correction as in FIG. 6.

With a pair of such glass lenses used to increase distortion in a desired direction (in the direction of over-correction or under-correction), distortion generated at the over-correction side of the glass lenses is expected to be corrected by using a plastic lens, which is significantly susceptible to distortion due to temperature change, for optical design to cause distortion to change more significantly in the direction of under-correction.

In view of such advantageous effects, in the present embodiment, the image-side surface of the plastic lens L5, which is closer to the image than the plastic lens L4 among two plastic lenses L4 and L5, includes an area in which the absolute value of the positive curvature increases in a range from the vicinity of the optical axis (i.e., an area near the optical axis) to the off-axis area. In the vicinity of the optical axis (the area near the optical axis of the surface of the plastic lens L5, facing the image), the absolute value of the positive curvature is relatively small to prevent a variation in focal position due to a large positive curvature (the curvature is positive in the vicinity of the optical axis). The absolute value of the positive curvature increases to the off-axis portion, which is a peripheral portion of the plastic lens L5. Notably, the "vicinity of the optical axis" refers to an area close to the optical axis in which paraxial approximation is possible, and the "off-axis area" refers to an outer edge portion when viewed from the vicinity of the optical axis.

This configuration allows the vicinity of the optical axis to cancel out variations in focal position with temperature changes between two plastic lenses, and also allows the off-axis portion with an increased negative power to excessively increase distortion in the direction of under-correction beyond cancellation of variations in distortion with temperature changes.

Such a configuration enables correction of variations in distortion, which includes variations in distortion in the direction of over-correction caused by the two glass lenses L1 and L6. The configuration in which the surface closest to the image among the two plastic lenses L4 and L5 has a prescribed shape facilitates separation of the light beams beams at the respective angles of view from each other, and also facilitates control of the effects of changes in distortion.

For the above description, FIG. 7 is an illustration of a variation in focal position at the vicinity of the optical axis and the degree and direction of a change in distortion at the off-axis portion, according to an embodiment.

For the variation in focal position at the vicinity of the optical axis, a rightward arrow indicates a focus shift in the positive direction, and a leftward arrow indicates a focus shift in the negative direction. For the change in distortion, an upward arrow indicates a distortion change in the direction of over-correction, and a downward arrow indicates a distortion change in the direction of under-correction.

The following describes this configuration with reference to FIG. 7. The variations in focal position at high temperatures are cancelled out by a focus shift in the negative direction due to a decrease in negative power of the glass lens L1 in the first lens group G1 and negative power of the plastic lens L5 in the second lens group G2 and a focus shift in the positive direction due to a decrease in positive power of the plastic lens L4 in the second lens group G2 and positive power of of the glass lens L6 in the second lens group G2.

The changes in distortion at high temperatures are cancelled out by a change in distortion in the direction of over-correction due to a decrease in negative power of the glass lens L1 in the first lens group G1, positive power of the plastic lens L4 in the second lens group G2, and positive power of the glass lens L6 in the second lens group G2 and a change in distortion in the direction of under-correction due to a decrease in negative power particularly in the off-axis portion of the image-side surface of the plastic lens L5 having negative power in the second lens group G2. The image-side surface of the plastic lens L5 has a strong negative power.

With such a lens configuration that cancels out variations in focal position and changes in distortion with temperature changes, the image-capturing optical system 1 has a wide angle of view and high accuracy and also achieves a reduction in both variations in focal position and variations in angle of view with temperature despite its use of plastic lenses.

In the present embodiment, the image-side surface of the plastic lens L5 may have at least one area in which the absolute value of the positive curvature increases. For example, the image-side surface of the plastic lens L5 may have multiple extreme values such that the positive curvature once decreases and then increases in a range from the vicinity of the optical axis to the off-axis area. In the low temperature environment, the directivity is opposite to that in the high temperature environment. Thus, a like advantageous effect can be obtained by a like configuration. A specific configuration of the "area where the absolute value of the positive curvature increases" will be described in the following numerical examples.

As Numerical Example 1 having the lens configuration as described above, Numerical Examples of the first lens group G1 and the second lens group G2 are described below.

In the following Numerical Examples, f denotes a focal length of the image-capturing optical system as a whole, Fno denotes an open F-number, $\theta$denotes a half angle of view, Y denotes a maximum image height, r denotes a radius of curvature, d denotes a surface distance, Nd denotes a refractive index, vd denotes an Abbe number, and Apt denotes a maximum effective radius.

As illustrated in FIG. 4, the first lens group G1 includes, in order from the object side to the image side, a meniscus glass lens L1 having negative power and a convex surface facing the object side, a meniscus glass lens L2 having negative power and a concave surface facing the object side, and a biconvex glass lens L3 having positive power.

The second lens group G2 includes a biconvex plastic lens L4 having positive power, a biconcave plastic lens L5 having negative power, and a biconvex glass lens L6 having positive power.

In the present Example, the curved surfaces of the glass lenses L1, L2, L3 and L6 are all spherical lenses, and the plastic lenses L4 and L5 are all aspherical lenses.

Of the plastic lenses L4 and L5, the plastic lens L4 disposed on the object side is a first plastic lens, and the plastic lens L5 disposed on the image side is a second plastic lens.

In Numerical Example 1, the focal length f of the optical system as a whole is 4.50 mm, the open F-number Fno is 1.90, the half angle of view $\theta$is 64 degrees, and the maximum image height Y is 4.32 mm. The optical properties such as the radius of curvature r, the surface distance d, the refractive index Nd, the Abbe number νd, and the maximum effective radius Apt are as listed in TABLE 1.

The surface numbers for the aspherical surfaces of the plastic lenses are emphasized with asterisks (*) in TABLE 1, and the aspherical coefficients of the plastic lenses are listed in TABLE 2.

[Table 1]

| SURFACE NUMBER | r | d | Nd | νd | Apt |
|---|---|---|---|---|---|
| 1 | 91.276 | 1.000 | 1.6779 | 55.34 | 5.40 |
| 2 | 3.889 | 3.678 | | | 3.50 |
| 3 | -5.386 | 2.214 | 1.8160 | 46.62 | 3.40 |
| 4 | -6.864 | 0.200 | | | 3.90 |
| 5 | 6.772 | 2.998 | 1.6204 | 60.29 | 3.70 |
| 6 | -29.099 | 1.324 | | | 3.20 |
| 7 | ∞ | 1.210 | | | 2.42 |
| 8* | 9.426 | 2.985 | 1.5370 | 55.99 | 2.40 |
| 9* | -4.637 | 0.200 | | | 2.88 |
| 10* | -5.139 | 1.000 | 1.6561 | 21.23 | 2.70 |
| 11* | 14.885 | 1.352 | | | 2.90 |
| 12 | 10.162 | 2.180 | 1.8160 | 46.62 | 4.10 |
| 13 | -81.611 | 0.563 | | | 4.20 |
| 14 | ∞ | 1.100 | 1.5163 | 64.14 | 4.50 |
| 15 | ∞ | 2.000 | | | 4.50 |
| 16 | ∞ | 0.500 | 1.5163 | 64.14 | 4.50 |
| 17 | ∞ | 0.435 | | | 4.50 |

[Table 2]

| SURFACE NUMBER | k | A4 | A6 | A8 | A10 | A12 |
|---|---|---|---|---|---|---|
| 8* | 1.4965 | -1.5401E-03 | -2.9792E-04 | 2.9996E-05 | -5.3830E-06 | 0.0000E+00 |
| 9* | -0.8148 | 9,7960E-04 | 4.0665E-04 | 1,1647E-05 | -3.8190E-07 | 0.0000E+00 |
| 1 0* | -6.9947 | -3.6224E-03 | 2.6913E-04 | -4.1424E-05 | 3,0463E-06 | 0.0000E+00 |
| 11* | 10.0000 | 1,1248E-03 | -3.8531E-05 | -3.86496-06 | 2.3923E-07 | 0.0000E+00 |

In the present numerical example, the second lens group G2 includes two plastic lenses L4 and L5 adjacent to each other and a glass lens L6 having a positive power closest to the image.

This arrangement enables a wider angle of view and a higher resolution while achieving a reduction in both variations in focal position and variations in angle of view with temperature despite fewer plastic lenses.

Further, the 11th surface in TABLES 1 and 2, which is the image-side surface of the plastic lens L5 closer to the image than the plastic lens L4 adjacent to the plastic lens L5, corresponds to a surface having an area where the absolute value of the positive curvature increases in a range from the vicinity of the optical axis to the off-axis area of the surface.

This feature is described in detail below.

FIG. 8 is a graph of the relation between curvatures and lens heights where the horizontal axis 0 represents the optical axis of the 11th surface, and the vertical axis represents a curvature at each point in a range from the optical axis to the off-axis area of the 11th surface, according to Numerical Example 1.

As is clear from FIG. 8, the 11th surface, which is the image-side surface of the plastic lens L5, includes an area where the absolute value of a local curvature cb at the off-axis area becomes greater than the absolute value of a local curvature ca in the vicinity of the optical axis. In other words, the absolute value of the positive curvature increases within a range from the vicinity of the optical axis to the off-axis area in the image-side surface (the surface facing the image) of the plastic lens L5.

In the present embodiment, as described with reference to FIG. 7, balancing two plastic lenses L4 and L5 having positive and negative powers cancels out a variation in focal position with temperature change.

Specifically, Conditional Expression (3) is satisfied where f1 is a focal length of the object-side plastic lens L4, and f2 is a focal length of the image-side plastic lens L5:

$$0.8 < |f1/f2| < 1.2 \quad \ldots \quad (3)$$

In the present embodiment, the image-side surface (the 11th surface) of the image-side plastic lens L5 includes an area where the absolute value of the positive curvature increases in a range from the vicinity of the optical axis (i.e., an area near the optical axis) to the off-axis area. In other words, in the image-side surface of the plastic lens L5, the absolute value of the positive curvature increases within a range from the vicinity of the optical axis to the off-axis area.

The image-side surface of the plastic lens L5 satisfies Conditional Expression (4) where ca is a local curvature in the vicinity of the optical axis, and cb is a local curvature whose absolute value is largest within a range from the vicinity of the optical axis to the off-axis area:

$$2 < cb/ca < 5 \quad \ldots \quad (4)$$

In Conditional Expression (4), when the value is lower than or equal to 2, a change in distortion with temperature change is insufficient to cancel out distortion, or a variation in focal position. If the value is greater than or equal to 5, field curvature due to a temperature change excessively increases, and resolution of an object image formed with rays from the off-axis area might significantly deteriorate although a variation in angle of view with temperature is successfully reduced.

The image-side surface of the plastic lens L5 satisfying Conditional Expression (4) (i.e., the relation between the local curvature ca in the vicinity of the optical axis and the local curvature cb in a range from the vicinity of the optical axis to the off-axis area is defined within the range of Conditional Expression (4)) achieves a reduction in variations in focal position and angle of view with temperature while enabling a wider angle of view and a higher accuracy.

A challenge for using a plastic lens is to maintain brightness and color balance. Unlike plastic lenses, glass lenses face difficulties in forming an antireflection film with a high transmittance thereon, have higher light absorptions particularly at short-wavelengths, and more likely deteriorate with time because of the influence of its weather resistance.

In order to maintain sufficient brightness and color balance even in environment using, for example, an in-vehicle camera, limited number of plastic lenses (one or two plastic lenses) are often used in an image-capturing optical system. However, using fewer plastic lenses adversely reduces the degree of flexibility in adjustment for variations in focal position and angle of view with temperature.

For the use of two plastic lens as in the present embodiment, the degree of flexibility in balancing positive power and negative power is extremely small, and temperature design becomes difficult.

To avoid such circumstances and achieve successful image-capturing performance and temperature compensation, Conditional Expression (5) is satisfied where DA is the sum of thicknesses along the optical axis of all the lenses included in all the lens groups (the first lens group G1 and the second lens group G2), and Dp is the sum of thicknesses along the optical axis of two plastic lenses L4 and L5. In this case, all the lenses included in the lens groups are lenses L1, L2, L3, L4, L5, and L6 in FIG. 4.

Determining the thicknesses of all the plastic lenses incorporated in the image-capturing optical system within the range defined by Conditional Expression (5) achieves the issues of transmittance as well.

$$Dp/Da < 0.4 \quad \ldots \quad (5)$$

This configuration restricts the ratio of the sum of the thicknesses of the plastic lenses L4 and L5 to the sum of the thicknesses along the optical axis of all the lenses included in the image-capturing optical system 1, and enables a sufficient degree of flexibility in adjusting both a variation in focal position and a variation in angle of view with temperature while maintaining sufficient brightness and color balance between lenses included in the image-capturing optical system 1.

In the present embodiment, the two plastic lenses L4 and L5 are adjacent to each other. Such an arrangement allows these plastic lenses L4 and L5 to be fit and held together outside the effective diameters thereof.

In the present embodiment as described above, the image-side surface of the plastic lens L5 has power change due to its area where the absolute value of the positive curvature increases in a range from the vicinity of the optical axis to the off-axis area of the image-side surface. Such a lens is highly sensitive to decentering that occurs during its manufacture and easily deteriorates.

The object-side plastic lens L4 is designed to decenter to cancel out a change in aberration, and the object-side plastic lens L4 and the image-side plastic lens L5 are fit together to simultaneously decenter (group decentering).

The fit between the object-side plastic lens L4 and the image-side plastic lens L5 allows a reduction in aberration change due to group decentering of the plastic lenses L4 and L5, and also enables an increase in power of each of the plastic lenses L4 and L5.

Further, typical plastic lenses are more easily molded in a complicated structure than glass lenses, and a fit-and-held structure 17 as in FIG. 9 is easily formed using the degree of flexibility in formation. Further, in such a fit-and-held structure, resin lenses are easily fit together in a direct manner. For this reason, the image-capturing optical system according to an embodiment has the fit-and-held structure 17 in which the two adjacent plastic lenses L4 and L5 are fit and held together.

The shape of the fit-and-held structure 17 is not limited to the configuration in FIG. 9. However, in order to fit plastic lenses together, as illustrated in FIG. 9, such a structure is to be outside the optical surface of the lens, i.e., outside the effective diameter of the lens, and molding involves a gate structure during manufacture. With such factors, the plastic lenses are more likely to upsize than typical glass lenses. Upsizing of plastic lenses might cause upsizing of an image-capturing lens as a whole and an increase in error due to decentering during assembly.

To avoid such a situation, the object side plastic lens L4 is positioned adjacent to the aperture stop S to reduce the effective range of the optical surface so as to reduce upsizing of the plastic lens L4. Further, Conditional Expression (6) is satisfied to further reduce upsizing of the plastic lens L4, where D1 is a distance along the optical axis between the aperture stop S and the object-side surface (the surface facing the object) of the object-side plastic lens L4, and D2 is a distance along the optical axis between the aperture stop S and the image-side surface (the surface facing the image) of the image-side plastic lens L5:

$$D1/D2 < 0.5 \quad \ldots \quad (6)$$

Conditional Expression (6) regulates a ratio of the distance between the aperture stop S and the object-side plastic lens to the distance between the aperture stop S and the image-side plastic lens.

In the present embodiment, the aspherical surface of the object-side plastic lens L4 closer to the aperture stop S serves to correct spherical aberration and coma aberration.

However, an increase in distance between the plastic lens L4 and the aperture stop S (i.e., an increase in D1) without satisfying Conditional Expression (6) causes light beams at the respective angles of view to separate from each other. The aspherical shape of the plastic lens causes differences between powers given to the light beams separated from each other, thus possibly failing to cancel out a change in distortion during temperature changes.

In the present embodiment, the object-side plastic lens L4 is to be biconvex, and the image-side plastic lens L5 is to be biconcave. In other words, the first plastic lens L4 has a biconvex shape in the vicinity of the optical axis, and the second lens L5 has a biconcave shape in the vicinity of the optical axis.

With such a shape, various aberrations generated in the glass lenses of the first lens group G1 and the second lens group G2 can be favorably corrected.

Although a retrofocus lens in which a first lens group having negative power and a second lens group having positive power is typically used in a wide-angle lens, the image-capturing optical system 1 according to an embodiment uses the first lens group G1 and the second lens group G2 each having positive power.

In the present embodiment, the first lens group G1 having positive power allows light beams passed therethrough and traveling to the second lens group G2 to converge, and thus enable a reduction in the effective ranges of the optical surfaces of the plastic lenses L4 and L5. Further, in the present embodiment, Conditional Expression (7) is satisfied where ff is a focal length of the first lens group G1, and fr is a focal length of the second lens group G2:

$$0.8 < ff/fr < 2 \quad \ldots \quad (7)$$

Conditional Expression (7) defines a ratio of power of the first lens group G1 to power of the second lens group G2.

If the value is lower than or equal to 0.8, power of the first lens group G1 relatively increases, but the image-side principal point position is shifted to the object side, which makes it difficult to obtain back focus.

If the value is greater than or equal to 2, power of the second lens group G2 relatively increases. In this case, the two plastic lenses L4 and L5 in the second lens group G2 balance the positive power and negative power, and another glass lens, particularly the glass lens L6 closest to the image, other than the plastic lenses L4 and L5 serves to increase positive power so as to increase positive power of the second lens group G2. As a result, the curvature of the glass lens L6 as a positive lens increases, resulting in an increase in thickness to obtain the edge thickness and a deterioration in sensitivity to errors.

Determining the ratio of the positive power of the first lens group G1 to the positive power of the second lens group G2 within the range defined by Conditional Expression (7) reduces the effective diameters of the plastic lenses, and thus prevents upsizing of the image-capturing optical system 1 as a whole.

In the first lens group G1 according to the present embodiment, the glass lenses L1 and L2 as negative lenses serve to capture rays at wide angles of view, whereas the glass lens L3 as a positive lens serves to form an image onto the imaging plane while correcting aberration.

The image-capturing optical system 1 according to the present embodiment, the first lens group G1 includes a first sub-lens group as the glass lens L1 having negative power, and a second sub-lens group as the glass lenses L2 and L3 having positive power, which are sequentially arranged from the object side to the image side. The image-capturing optical system 1 according to the present embodiment satisfies Conditional Expression (8) where ff1 is a focal length of the first sub-lens group, and f is a focal length of the image-capturing optical system 1 as a whole. The power of each of the first and second sub-lens groups is determined by the combined focal length of the lenses included in a corresponding sub-lens group.

$$1.2 < |ff1/f| < 2 \quad \ldots \quad (8)$$

If the value is lower than or equal to 1.2, negative power of the first sub-lens group excessively increases. This easily enables a wider angle of view, but involves increasing positive power of the glass lens L6 closest to the image in the second lens group G2 so as to cancel out field curvature and a variation in focal position with temperature as illustrated in FIG. 23. In other words, changes in distortion with temperature increases because of the synergy between the glass lenses, and the curvature of the image-side surface of the image-side plastic lens is to be changed. This causes an increase in a variation in field curvature with temperature and an increase in sensitivity to errors due to lens decentering during assembly.

If the value is greater than or equal to 2, negative power of the first sub-lens group excessively decreases, and the lens following the first sub-lens group has difficulty in capture rays at wide angle of views because of insufficient negative distortion.

Restricting the negative power of the sub-lens group in the first lens group G1 within the range defined by Conditional Expression (8) enables a wider angle of view and a higher resolution while achieving a reduction in both variations in focal position and variations in angle of view with temperature.

In the present embodiment, a meniscus lens having negative power is used as the glass lens L1 closest to the object in the first lens group G1 to capture rays at wide angles of view while generating negative distortion. However, if this function is dealt with only by the meniscus lens, the curvature becomes larger as the angle of view becomes wider, which leads to deterioration of surface accuracy with an increase in manufacturing difficulty. The object-side surface of the glass lens L2, which is the second to the lens closest to the object in the first lens group G1 (i.e., the glass lens L2 is adjacent to the meniscus lens), is designed to have a negative curvature to partly serve to capture rays at wide angles of view.

This configuration enables capturing of rays at wide angles of view while generating negative distortion.

In the image-capturing optical system 1 according to the present embodiment lenses other than the two plastic lenses L4 and L5 are glass lenses.

This configuration facilitates adjustment of various aberrations by incorporating some aspherical glass lenses. However, since an aspherical lens formed by glass molding is relatively costly in manufacturing, total cost reduction effect due to the use of a plastic lens for the image-capturing lens is reduced.

In view of this, in the present embodiment, an aspherical surface is formed only on the plastic lenses L4 and L5 which can be manufactured at low cost, the aspherical surface shape for obtaining the intended advantageous effects and the aspherical surface shape for adjusting various aberrations are provided on the two plastic lenses L4 and L5, and all glass lenses are spherical lenses formed by polishing.

With this configuration, the image-capturing optical system 1 achieves the manufacturing cost reduction for lenses included in the image-capturing optical system 1, and enables adjustment of various aberrations with high accuracy.

Embodiments of the present disclosure enables temperature compensation for an image-capturing optical system having a wide angle of view, and are applicable in an image-capturing optical system having a half maximum angle of view of 50 degrees or greater.

TABLE 3 lists the value s for Conditional Expressions (3) to (8) in Numerical Example 1.

[Table 3]

| | |
|---|---|
| f 1 | 6.252 |
| f 2 | -5.709 |
| c a | 0.067 |
| c b | 0.142 |
| Dp | 3.985 |
| D a | 12.377 |
| D 1 | 1.210 |
| D 2 | 5.395 |
| f f | 12.374 |
| f r | 11.622 |
| f f 1 | -6.019 |
| f | 4.500 |

FIG. 10 is a collection of a spherical aberration diagram, a field curvature diagram, and a distortion diagram with the image-capturing optical system 1 according to Numerical Example 1 focused on an object at infinity.

In FIG. 10, d represents aberration at d-line ($\lambda$ = 587. 6 nm), C represents aberration at C-line ($\lambda$ = 656. 3 nm), and F represents aberration at F-line ($\lambda$ = 486. 1 nm). Further, in the field curvature aberration, a broken line T represents meridional aberration, and a solid line S represents sagittal aberration. As is clear from FIG. 10, an image-capturing optical system, which has a wide angle of view (a half angle of view 64 degrees) and a large aperture of approximately F 2.0 or less and includes six lenses provide extremely successful imaging performance.

FIG. 11 represents modulation transfer function (MTF) curves at the center image height at a room temperature of 20°C (solid line) and at a high temperature of 105°C (broken line), respectively, according to Numerical Example 1. The horizontal axis denotes a defocusing direction (i.e., along the optical axis) where the sensor surface is 0, and the vertical axis denotes an MTF value. As can be seen from FIG. 11, a variation in MTF peak between the room temperature and the high temperature is reduced to approximately +2 $\mu$m. This enables a reduction in a variation in focal position with a change in temperature from a room temperature to a high temperature in the image-capturing optical system 1.

FIG. 12 is a graph of the relation between a variation in angle of view and image height when temperature changes.

In Numerical Example 1, a variation in maximum angle of view with a change in temperature from the room temperature of 20°C to the high temperature of 105°C is reduced to 0. 112 degrees over the entire image heights. Even in such a very high temperature environment, a variation in maximum angle of view is reduced to $\pm$0.2 to 0. 3 degrees, and a variation in MTF is reduced to a small variation of less than several $\mu$m.

This means that the image-capturing optical system according to Numerical Example 1 achieves a wide angle view and a successful imaging performance while enabling a reduction in both a variation in focal position and a variation in angle of view with temperature. The configuration according to Numerical Example 1 also achieves a reduction in a variation in focal position and a variation in angle of view at low temperatures.

Next, an image-capturing optical system 1 according to Numerical Example 2 is described.

As illustrated in FIG. 13, the image-capturing optical system 1 according to Numerical Example 2 includes, sequentially from an object side toward an image side, a first lens group G1 having positive power as a whole, an aperture stop S, and a second lens group G2 having positive power as a whole.

The first lens group G1 includes a meniscus glass lens L1 having negative power, a biconcave glass lens L2 having negative power, a biconvex glass lens L3 having positive power, and a meniscus glass lens L4 having a convex surface on the object side and having positive power.

The second lens group G2 includes a biconvex plastic lens L5 having positive power, a biconcave plastic lens L6 having negative power, and a biconvex glass lens L7 having positive power, which are sequentially arranged from the object side to the image side.

In Numerical Example 2, the surfaces of the glass lenses are all spherical surfaces, and the surfaces of the plastic lenses are all aspherical surfaces. In other words, all the glass lenses have a spherical optical surface.

Further, in Numerical Example 2, the image-side surface of the glass lens L2 and the object-side surface of the glass lens L3 of the first lens group G1 are cemented to each other with an adhesive, and the glass lens L2 and the glass lens L3 are formed as a single integrated cemented lens.

In Numerical Example 2, the focal length f of the optical system as a whole is 4.50 mm, the open F-number Fno is 1.90, the half angle of view θis 64 degrees, and the maximum image height Y is 4.32 mm. The optical properties such as the radius of curvature r, the surface distance d, the refractive index Nd, the Abbe number νd, and the maximum effective radius Apt are as listed in TABLE 4.

The surface numbers for the aspherical surfaces of the plastic lenses are emphasized with asterisks (*) in TABLE 4, and the aspherical coefficients of the plastic lenses are listed in TABLE 5.

[Table 4]

| SURFACE NUMBER | r | d | Nd | νd | Apt |
|---|---|---|---|---|---|
| 1 | 257.556 | 1.000 | 1.6935 | 53.21 | 5.40 |
| 2 | 4.075 | 3.120 | | | 3.60 |
| 3 | -8.685 | 2.680 | 1.5163 | 64.14 | 3.50 |
| 4 | 7.861 | 3.200 | 1.8160 | 46.62 | 3.70 |
| 5 | -13.945 | 0.200 | | | 3.60 |
| 6 | 6.690 | 1.910 | 1.4970 | 81.54 | 3.30 |
| 7 | 31.568 | 0.425 | | | 2.80 |
| 8 | ∞ | 1.045 | | | 2.64 |
| 9* | 22.840 | 2.960 | 1.5370 | 55.99 | 2.50 |
| 10* | -4.528 | 0.200 | | | 2.90 |
| 11* | -5.517 | 2.500 | 1.6561 | 21.23 | 2.90 |
| 12* | 29.156 | 0.800 | | | 3.50 |
| 13 | 10.902 | 2.480 | 1.5962 | 67.74 | 4.10 |
| 14 | -18.256 | 0.890 | | | 4.20 |
| 15 | ∞ | 1.100 | 1.5163 | 64.14 | 4.50 |
| 16 | ∞ | 2.500 | | | 4.50 |
| 17 | ∞ | 0.500 | 1.5163 | 64.14 | 4.50 |
| 18 | ∞ | 0.435 | | | 4.50 |

[Table 5]

| SURFACE NUMBER | k | A4 | A6 | A8 A10 | | A12 |
|---|---|---|---|---|---|---|
| 9* | 1,1032 | -6.7477E-04 | -1.3705E-04 | 1,7994E-05 | -2.1389E-06 | 0.0000E+00 |
| 10* | -0.9696 | 1.3328E-03 | -9.8043E-05 | -1530TE-05 | 3.9065E-07 | 0,0000E+00 |
| 11* | -6.4754 | -3.9198E-03 | 3.7336E-04 | -4.9997E-05 | 2.0143E-06 | 0.0000E+00 |
| 12* | 6.6263 | -1.1090E-04 | 6.6200E-05 | -4.8043E-06 | 1.5467E-07 | 0.0000E+00 |

In Numerical Example 2, the second lens group G2 includes two plastic lenses L5 and L6 adjacent to each other and a glass lens L7 having a positive power closest to the image.

This arrangement enables a wider angle of view and a higher resolution while achieving a reduction in both variations in focal position and variations in angle of view with temperature despite fewer plastic lenses.

In the present Example, the 12th surface in TABLES 4 and 5, which is the image-side surface of the plastic lens L6 closer to the image than the plastic lens L5 adjacent to the plastic lens L6, corresponds to a surface having an area where the absolute value of the positive curvature increases in a range from the vicinity of the optical axis to the off-axis area of the surface.

FIG. 11 is a graph in which the horizontal axis represents the center of the optical axis on the image-side surfaces (12th surface) of the plastic lens L6 as 0, and the vertical axis represents a curvature at each defocusing position.

As is clear from FIG. 14, in Numerical Example 2, the image-side surface of a plastic lens L6 closer to the image than another plastic lens L5 adjacent to the plastic lens L6 has a local curvature cb at its peripheral area, whose absolute value becomes larger than the absolute value of a local curvature ca in the vicinity of the optical axis.

In Numerical Example 1, the local curvature cb at the peripheral area, whose absolute is largest in a range from the vicinity of the optical axis to the off-axis area is a curvature at a height of 3.5 mm at an outermost end of the effective diameter.

Similarly with Numerical Example 1, the image-capturing optical system 1 according to Numerical Example 2 satisfies all of Conditional Expressions (3) to (8) describe above. TABLE 6 lists the numerical values used in Conditional Expressions (3) to (8) in Numerical Example 2. Numerical Example 2 differs from Numerical Example 1 in lenses included in each of the first lens group G1 and the second lens group G2: the two plastic lenses L4 and L5 in Numerical Example 1 correspond to plastic lenses L5 and L6 in Numerical Example 2; and the image-side surface (the 11th surface) of the image-side plastic lens L5 in Numerical Example 1 corresponds to the image-side surface (the 12th surface) of the image-side plastic lens L6 in Numerical Example 2.

[Table 6]

| | |
|---|---|
| f 1 | 7.314 |
| f 2 | -6.874 |
| c a | 0.034 |
| c b | 0.134 |
| Dp | 5.460 |
| D a | 16.730 |
| D 1 | 1.045 |
| D 2 | 6.705 |
| f f | 11.162 |
| f r | 12.401 |
| f f 1 | -5.981 |
| f | 4.500 |

As described above, also in Numerical Example 2, by balancing the positive and negative powers of the two plastic lenses L5 and L6, the focal position variations at the time of temperature change are offset from each other.

Specifically, Conditional Expression (3) is satisfied where f1 is a focal length of the object-side plastic lens L5, and f2 is a focal length of the image-side plastic lens L6:
With this configuration, balancing two plastic lenses L5 and L6 having positive and negative powers cancels out a variation in focal position with temperature.

In Numerical Example 2, the image-side surface (the 12th surface) of the image-side plastic lens L6 includes an area where the absolute value of the positive curvature increases in a range from the vicinity of the optical axis (i.e., an area near the optical axis) to the off-axis area.

The image-side surface of the plastic lens L6 satisfies Conditional Expression (4) where ca is a local curvature in the vicinity of the optical axis, and cb is a local curvature whose absolute value is largest within a range from the vicinity of the optical axis to the off-axis area:
The image-side surface of the plastic lens L6 satisfying Conditional Expression (4) (i.e., the relation between the local curvature ca in the vicinity of the optical axis and the local curvature cb in a range from the vicinity of the optical axis to the off-axis area is defined within the range of Conditional Expression (4)) achieves a reduction in variations in focal position and angle of view with temperature while enabling a wider angle of view and a higher accuracy.

To achieve successful image-capturing performance and temperature compensation in Numerical Example 2, Conditional Expression (5) is satisfied where Da is the sum of thicknesses along the optical axis of all the lenses included in all the lens groups (the first lens group and the second lens group), and Dp is the sum of thicknesses along the optical axis of two plastic lenses L5 and L6. In this case, all the lenses included in all the lens groups are lenses L1 to L7 in FIG. 14.

Determining the thicknesses of all the plastic lenses incorporated in the image-capturing optical system within the range defined by Conditional Expression (5) achieves the issues of transmittance as well.

This configuration restricts the ratio of the sum of the thicknesses of the plastic lenses L5 and L6 to the sum of the thicknesses along the optical axis of all the lenses included in the image-capturing optical system 1, and enables a sufficient degree of flexibility in adjusting both a variation in focal position and a variation in angle of view with temperature while maintaining sufficient brightness and color balance between lenses included in the image-capturing optical system 1.

In Numerical Example 2, the object side plastic lens L5 is positioned adjacent to the aperture stop S to reduce the effective range of the optical surface so as to reduce upsizing of the plastic lens L5. Further, Conditional Expression (6) is satisfied to further reduce upsizing of the plastic lens L4, where D1 is a distance along the optical axis, between the aperture stop S and the object-side surface (the surface facing the object) of the object-side plastic lens L4, and D2 is a distance along the optical axis between the aperture stop S and the image-side surface (the surface facing the image) of the image-side plastic lens L5:

The image-capturing optical system 1 according to Numerical Example 3 uses the first lens group G1 and the second lens group G2 each having positive power.

Further, in Numerical Example 2, Conditional Expression (7) is satisfied where ff is a focal length of the first lens group G1, and fr is a focal length of the second lens group G2:

Determining the ratio of the positive power of the first lens group G1 to the positive power of the second lens group G2 within the range defined by Conditional Expression (7) reduces the effective diameters of the plastic lenses, and thus prevents upsizing of the image-capturing optical system 1 as a whole.

In the image-capturing optical system 1 according to Numerical Example 2, a first lens group G1 includes a first sub-lens group as the glass lens L1 having negative power, and a second sub-lens group as the glass lenses L2, L3, and L4 having positive power, which are sequentially arranged from the object side to the image side. The image-capturing optical system 1 according to Numerical Example 2 satisfies Conditional Expression (8) where ff1is a focal length of the first sub-lens group, and f is a focal length of the image-capturing optical system 1 as a whole.

Restricting the negative power of the sub-lens group in the first lens group G1 within the range defined by Conditional Expression (8) enables a wider angle of view and a higher resolution while achieving a reduction in both variations in focal position and variations in angle of view with temperature.

FIG. 15 is a collection of a spherical aberration diagram, a field curvature diagram, and a distortion diagram, each representing aberration curves, according to Numerical Example 2. The signs, the solid line, and broken line in each aberration curve are the same as those in Numerical Example 1, and thus description thereof will be omitted.

FIG. 16 is a graph of a variation in focal position (defocusing position) with temperature according to Numerical Example 2. FIG. 17 is a graph of a variation in angle of view with temperature according to Numerical Example 2.

In Numerical Example 2, a variation in maximum angle of view and a variation in MTF peak (height index for resolution) with a change in temperature from the room temperature of 20°C to the high temperature of 105°C are reduced to 0. 155 degrees and -1 $\mu$m, respectively. Even in such a very high temperature environment, a variation in maximum angle of view is reduced to $\pm$0.2 to 0. 3 degrees, and a variation in MTF is reduced to a small variation of less than several $\mu$m.

This means that the image-capturing optical system according to Numerical Example 2 achieves a wide angle view and a successful imaging performance while enabling a reduction in both a variation in focal position and a variation in angle of view with temperature. The configuration according to Numerical Example 1 also achieves a reduction in a variation in focal position and a variation in angle of view at low temperatures.

The following describes Numerical Example 3.

As illustrated in FIG. 18, the image-capturing optical system 1 according to Numerical Example 3 includes, sequentially from an object side toward an image side, a first lens group G1 having positive power as a whole, an aperture stop S, and a second lens group G2 having positive power as a whole.

The first lens group G1 includes a meniscus glass lens L1 having negative power and a convex surface facing the object side, a meniscus glass lens L2 having positive power and a concave surface facing the object side, a meniscus glass lens L3 having negative power and a concave surface facing the object side, and a plano-convex glass lens L4 having positive power and a convex surface facing the object side.

The second lens group G2 includes a biconvex plastic lens L5 having positive power, a biconcave plastic lens L6 having negative power, and a biconvex glass lens L7 having positive power, which are sequentially arranged from the object side to the image side.

In Numerical Example 3, the surfaces of the glass lenses are all spherical surfaces, and the surfaces of the plastic lenses are all aspherical surfaces.

Further, in Numerical Example 2, the image-side surface of the glass lens L2 and the object-side surface of the glass lens L3 of the first lens group G1 are cemented to each other with an adhesive, and the glass lens L2 and the glass lens L3 are formed as a single integrated cemented lens.

In Numerical Example 3, the focal length f of the optical system as a whole is 4.50 mm, the open F-number Fno is 1.90, the half angle of view θis 64 degrees, and the maximum image height Y is 4.32 mm. The optical properties such as the radius of curvature r, the surface distance d, the refractive index Nd, the Abbe number νd, and the maximum effective radius Apt are as listed in TABLE 7.

The surface numbers for the aspherical surfaces of the plastic lenses are emphasized with asterisks (*) in TABLE 7, and the aspherical coefficients of the plastic lenses are listed in TABLE 8.

[Table 7]

| SURFACE NUMBER | r | d | Nd | νd | Apt |
|---|---|---|---|---|---|
| 1 | 22.000 | 0.800 | 1.8040 | 46.53 | 5.20 |
| 2 | 4.468 | 3.730 | | | 3.60 |
| 3 | -5.765 | 2.440 | 1.5163 | 64.14 | 3.10 |
| 4 | -4.069 | 1.650 | 1.9537 | 32.32 | 3.10 |
| 5 | -6.313 | 0.200 | | | 3.60 |
| 6 | 11.095 | 2.170 | 1.8340 | 37.21 | 3.30 |
| 7 | ∞ | 2.140 | | | 3.20 |
| 8 | ∞ | 2.400 | | | 2.74 |
| 9* | 9.546 | 2.220 | 1.5370 | 55.99 | 3.20 |
| 10* | -6.747 | 0.200 | | | 3.30 |
| 11* | -9.160 | 0.800 | 1,6561 | 21.23 | 3.30 |
| 12* | 10.500 | 1.080 | | | 3.40 |
| 13 | 8.901 | 2.910 | 1.5952 | 67.74 | 4.40 |
| 14 | -23.000 | 1.500 | | | 4.50 |
| 15 | | 1.100 | 1.5163 | 64.14 | 4.50 |
| 16 | | 2.690 | | | 4.50 |
| 17 | | 0.500 | 1.5163 | 64.14 | 4.50 |
| 18 | | 0.435 | | | 4.50 |

[Table 8]

| SURFACE NUMBER | k | A4 A6 | | A8 | A10 | A12 | |
|---|---|---|---|---|---|---|---|
| 9* | 2.7227 | -3,1506E-04 | -3.9103E-05 | 2.5614E-06 | -3.7503E-07 | 7.3548E-09 | |
| 10* | -4.4475 | 3.2784E-04 | -1.8733E-04 | 3.2522E-05 | -3.2981E-06 | 1.2615E-07 | |
| 11* | 1.6297 | 1.3930E-04 | -1.9662E-05 | 1.8527E-05 | -2.5862E-06 | 1,2421E-07 | |
| 12* | -2.1688 | -6.4394E-04 | 1.7623E-04 | -1.3156E-05 | 4.6222E-07 | -1.4560E-09 | |

In Numerical Example 3, the second lens group G2 includes two plastic lenses L5 and L6 adjacent to each other and a glass lens L7 having a positive power closest to the image.

This arrangement enables a wider angle of view and a higher resolution while achieving a reduction in both variations in focal position and variations in angle of view with temperature despite fewer plastic lenses.

In the present Example, the 12th surface in TABLES 7 and 8, which is the image-side surface of the plastic lens L6 closer to the image than the plastic lens L5 adjacent to the plastic lens L6, corresponds to a surface having an area where the absolute value of the positive curvature increases in a range from the vicinity of the optical axis to the off-axis area of the surface.

FIG. 19 is a graph in which the horizontal axis represents the center of the optical axis on the image-side surfaces (12th surface) of the plastic lens L6 as 0, and the vertical axis represents a curvature at each defocusing position.

As is clear from FIG. 19, in Numerical Example 3, the image-side surface of a plastic lens L6 closer to the image than another plastic lens L5 adjacent to the plastic lens L6 has a local curvature cb at its peripheral area, whose absolute value becomes larger than the absolute value of a local curvature ca in the vicinity of the optical axis.

In Numerical Example 3, the local curvature cb at the peripheral area, whose absolute is largest in a range from the vicinity of the optical axis to the off-axis area is a curvature at a height of 3.4 mm at an outermost end of the effective diameter.

In other words, a "surface including an area where the absolute value of the positive curvature increases" in a range from the vicinity of the optical axis to the off-axis area refers to, in addition to a monotonic increase from the vicinity of the optical axis, a local decrease in absolute value of curvature before an increase in absolute value to become larger than that in the vicinity of the optical axis.

Similarly with Numerical Example 1, the image-capturing optical system 1 according to Numerical Example 3 satisfies all of Conditional Expressions (3) to (8) describe above. TABLE 9 lists the numerical values used in Conditional Expressions (3) to (8) in Numerical Example 3. Numerical Example 3 differs from Numerical Example 1 in lenses included in each of the first lens group G1 and the second lens group G2: the two plastic lenses L4 and L5 in Numerical Example 1 correspond to plastic lenses L5 and L6 in Numerical Example 3; and the image-side surface (the 11th surface) of the image-side plastic lens L5 in Numerical Example 1 corresponds to the image-side surface (the 12th surface) of the image-side plastic lens L6 in Numerical Example 3.

[Table 9]

| | |
|---|---|
| f 1 | 7.730 |
| f 2 | -7.338 |
| c a | 0.095 |
| c b | 0.210 |
| Dp | 3.020 |
| D a | 12.990 |
| D 1 | 2.400 |
| D 2 | 5.620 |
| f f | 19.677 |
| f r | 11.482 |
| f f 1 | -7.118 |
| f | 4.500 |

In Numerical Example 3, balancing two plastic lenses L5 and L6 having positive and negative powers cancels out a variation in focal position with temperature.

Specifically, Conditional Expression (3) is satisfied where f1 is a focal length of the object-side plastic lens L5, and f2 is a focal length of the image-side plastic lens L6:

With this configuration, balancing two plastic lenses L5 and L6 having positive and negative powers cancels out a variation in focal position with temperature.

In Numerical Example 3, the image-side surface (the 12th surface) of the image-side plastic lens L6 includes an area where the absolute value of the positive curvature increases in a range from the vicinity of the optical axis (i.e., an area near the optical axis) to the off-axis area.

The image-side surface of the plastic lens L6 satisfies Conditional Expression (4) where ca is a local curvature in the vicinity of the optical axis, and cb is a local curvature whose absolute value is largest within a range from the vicinity of the optical axis to the off-axis area:

The image-side surface of the plastic lens L6 satisfying Conditional Expression (4) (i.e., the relation between the local curvature ca in the vicinity of the optical axis and the local curvature cb in a range from the vicinity of the optical axis to the off-axis area is defined within the range of Conditional Expression (4)) achieves a reduction in variations in focal position and angle of view with temperature while enabling a wider angle of view and a higher accuracy.

To achieve successful image-capturing performance and temperature compensation in Numerical Example 3, Conditional Expression (5) is satisfied where Da is the sum of thicknesses along the optical axis of all the lenses included in all the lens groups, and Dp is the sum of thicknesses along the optical axis of two plastic lenses L5 and L6. In this case, all the lenses included in all the lens groups are lenses L1 to L7 in FIG. 18.

Determining the thicknesses of all the plastic lenses incorporated in the image-capturing optical system within the range defined by Conditional Expression (5) achieves the issues of transmittance as well.

This configuration restricts the ratio of the sum of the thicknesses of the plastic lenses L5 and L6 to the sum of the thicknesses along the optical axis of all the lenses included in the image-capturing optical system 1, and enables a sufficient degree of flexibility in adjusting both a variation in focal position and a variation in angle of view with temperature while maintaining sufficient brightness and color balance between lenses included in the image-capturing optical system 1.

In Numerical Example 3, the object side plastic lens L5 is positioned adjacent to the aperture stop S to reduce the effective range of the optical surface so as to reduce upsizing of the plastic lens L5. Further, Conditional Expression (6) is satisfied to further reduce upsizing of the plastic lens L4, where D1 is a distance along the optical axis between the aperture stop S and the object-side surface (the surface facing the object) of the object-side plastic lens L4, and D2 is a distance along the optical axis between the aperture stop S and the image-side surface (the surface facing the image) of the image-side plastic lens L5:

The image-capturing optical system 1 according to Numerical Example 3 uses the first lens group G1 and the second lens group G2 each having positive power.

Further, in Numerical Example 3, Conditional Expression (7) is satisfied where ff is a focal length of the first lens group G1, and fr is a focal length of the second lens group G2:

Determining the ratio of the positive power of the first lens group G1 to the positive power of the second lens group G2 within the range defined by Conditional Expression (7) reduces the effective diameters of the plastic lenses, and thus prevents upsizing of the image-capturing optical system 1 as a whole.

In the image-capturing optical system 1 according to Numerical Example 3, a first lens group G1 includes a first sub-lens group as the glass lens L1 having negative power, and a second sub-lens group as the glass lenses L2, L3, and L4 having positive power, which are sequentially arranged from the object side to the image side. The image-capturing optical system 1 according to Numerical Example 3 satisfies Conditional Expression (8) where ff1is a focal length of the first sub-lens group, and f is a focal length of the image-capturing optical system 1 as a whole.

Restricting the negative power of the sub-lens group in the first lens group G1 within the range defined by Conditional Expression (8) enables a wider angle of view and a higher resolution while achieving a reduction in both variations in focal position and variations in angle of view with temperature.

FIG. 20 is a collection of a spherical aberration diagram, a field curvature diagram, and a distortion diagram, each representing aberration curves, according to Numerical Example 3.

FIG. 21 is a graph of a variation in focal position (defocusing position) with temperature according to Numerical Example 3. FIG. 22 is a graph of a variation in angle of view with temperature according to Numerical Example 3.

In Numerical Example 3, a variation in maximum angle of view and a variation in MTF peak with a change in temperature from the room temperature of 20°C to the high temperature of 105°C are reduced to 0. 046 degrees and +3 $\mu$m, respectively. Even in such a very high temperature environment, a variation in maximum angle of view is reduced to $\pm$0.2 to 0. 3 degrees, and a variation in MTF is reduced to a small variation of less than several $\mu$m.

This means that the image-capturing optical system according to Numerical Example 3 achieves a wide angle view and a successful imaging performance while enabling a reduction in both a variation in focal position and a variation in angle of view with temperature. The configuration according to Numerical Example 1 also achieves a reduction in a variation in focal position and a variation in angle of view at low temperatures.

Next, a stereo camera 200 incorporating the image-capturing optical system 1 according to at least one embodiment of the present disclosure is described below according to a second embodiment.

FIG. 23 is an illustration of an external appearance of the stereo camera 200 provided with a right camera 100a and a left camera 100b each incorporating the image-capturing optical system 1 as an optical system.

As illustrated in FIG. 24, the right camera 100a and the left camera 100b include image-capturing optical systems 1a and 1b, each of which is the same as in the digital camera 100 and photosensors 13a and 13b for the image-capturing optical systems 1a and 1b, respectively.

The right camera 100a and the left camera 100b may have the same configuration as the digital camera 100, but are not limited to this configuration.

The stereo camera 200 includes an image processor 201 that corrects and processes image information captured by the right camera 100a and the left camera 100b.

The image processor 201, for example, processes an object P reflected in two images captured by the right camera 100a and the left camera 100b.

More specifically, a disparity Z is caused by a difference in position of object P between an image Qa captured by the right camera 100a and an image Qb captured by the left camera 100b.

The following describes a case where the position of the object P in the image Qb captured by the left camera 100b is estimated from the position of the right camera 100a.

The focal length f of the image-capturing optical system 1 as a whole and a measured distance D satisfy the relation defined by Conditional Expression (9) based on the principle of triangulation where B denotes the base length, or the distance between the right camera 100a and the left camera 100b, Z denotes a disparity:

$$D = Bf/Z \qquad (9)$$

The image processor 201 obtains a measured distance D using the base length B and the focal length f, which are stored in advance, and the disparity Z obtained from the two images captured by the right camera 100a and the left camera 100b.

In the stereo camera 200, however, if a variation in angle of view (a variation in image height) is generated due to a temperature change, the position at which light from the object forms an image is deviated, and the disparity Z involves a deviation.

Since this deviation may result in a measurement error of the measured distance D, the stereo camera 200 is to incorporate the image-capturing optical system 1 that involves a small variation in angle of view with temperature change.

To achieve the stereo camera 200 incorporating such an image-capturing optical system 1, each of the left camera 100b and the right camera 100a is to incorporate the image-capturing optical system 1 according to any one of Numerical Example 1 to Numerical Example 3. Incorporating the image-capturing optical system 1 into the stereo camera 200 reduces or prevents an increase in measurement errors due to variations in focal position and angle of view with temperature changes (environment changes).

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims. For example, some of the elements described in the above embodiments may be removed. Further, elements according to varying embodiments or modifications may be combined as appropriate.

For example, the image-capturing optical system according to an embodiment can be used as a projection optical system where the "image side" in the above description is changed to an object side and the "object side" in the above description is changed to an image side.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

## Claims

**1.** An image-capturing optical system (1) comprising:

an aperture stop (S);
a first lens group (G1) closer to an object than the aperture stop (S) and composed of multiple glass lenses (L1, L2, L3) including a meniscus lens (L1) having a negative power closest to the object within the first lens group (G1); and
a second lens group (G2) closer to an image than the aperture stop (S) and composed of:

a first plastic lens (L4);
a second plastic lens (L5) adjacent to the first plastic lens (L4) and closer to the image than the first plastic lens (L4), the second plastic lens (L5) having a surface facing the image, in which curvature is positive in vicinity of the optical axis and an absolute value of the curvature increases within a range from the vicinity of the optical axis to an off-axis area of the surface; and
one or more glass lenses (L6) including a glass lens having positive power closest to the image within the second lens group (G2).

**2.** The image-capturing optical system (1) according to claim 1, wherein Conditional Expression below is satisfied:

$$0.8 < |f1/f2| < 1.2$$

where

f1 is a focal length of the first plastic lens (L4), and
f2 is a focal length of the second plastic lens (L5).

3. The image-capturing optical system (1) according to claim 1 or 2, wherein Conditional Expression below is satisfied:

$$2 < cb/ca < 5$$

where

ca is a local curvature in the vicinity of the optical axis of the surface facing the image of the second plastic lens (L5), and
cb is a local curvature at which the absolute value of the curvature becomes largest within the range from the vicinity of the optical axis to the off-axis area of the surface facing the image of the second plastic lens (L5).

4. The image-capturing optical system (1) according to any one of claims 1 to 3, wherein Conditional Expression below is satisfied:

$$Dp/Da < 0.4$$

where

Da is the sum of thicknesses along the optical axis of the glass lenses (L1, L2, L3) of the first lens group (G1), the first plastic lens (L4), the second plastic lens (L5), and the one or more glass lenses (L6) of the second lens group (G2), and
Dp is the sum of thicknesses along the optical axis of the first plastic lens (L4) and the second plastic lens (L5).

5. The image-capturing optical system (1) according to any one of claims 1 to 4,

wherein the first plastic lens (L4) has a biconvex shape in the vicinity of the optical axis, and
wherein the second plastic lens (L5) has a biconcave shape in the vicinity of the optical axis.

6. The image-capturing optical system (1) according to any one of claims 1 to 5, wherein the first plastic lens (L4) is adjacent to the aperture stop (S).

7. The image-capturing optical system (1) according to claim 6, wherein Conditional Expression below is satisfied:

$$D1/D2 < 0.5$$

where

D1 is a distance along the optical axis, between the aperture stop (S) and a surface facing the object of the first plastic lens (L4), and
D2 is a distance along the optical axis, between the aperture stop (S) and the surface facing the image of the second plastic lens (L5).

8. The image-capturing optical system (1) according to any one of claims 1 to 7, wherein each of the first lens group (G1) and the second lens group (G2) has positive power.

9. The image-capturing optical system (1) according to claim 8, wherein Conditional Expression below is satisfied:

$$0.8 < ff/fr < 2$$

where

ff is a focal length of the first lens group (G1), and
fr is a focal length of the second lens group (G2).

**10.** The image-capturing optical system (1) according to any one of claims 1 to 9,

wherein the first lens group (G1) is composed of a first sub-lens group (L1) having negative power and a second sub-lens group (L2, L3) having positive power, and
wherein Conditional Expression below is satisfied:

$$1.2 < |ff1/f| < 2$$

where

ffl is a focal length of the first sub-lens group (L1), and
f is a focal length of the image-capturing optical system (1) as a whole.

**11.** The image-capturing optical system (1) according to any one of claims 1 to 10, wherein in the first lens group (G1), one of the glass lenses (L1, L2, L3), which is adjacent to the meniscus lens (L1) and closer to the image than the meniscus lens (L1), has a surface facing the object and having a negative curvature.

**12.** The image-capturing optical system (1) according to any one of claims 1 to 11, wherein the glass lenses (L1, L2, L3) of the first lens group (G1) and the one or more glass lenses (L6) of the second lens group (G2) all have a spherical optical surface.

**13.** The image-capturing optical system (1) according to any one of claims 1 to 12, wherein the image-capturing optical system (1) has a half maximum angle of view of 50 degrees or greater.

**14.** A camera (100) comprising the image-capturing optical system (1) according to any one of claims 1 to 13.

**15.** A stereo camera (200) comprising:
two cameras (100a, 100b) each including the image-capturing optical system (1) according to any one of claims 1 to 13.

FIG. 1

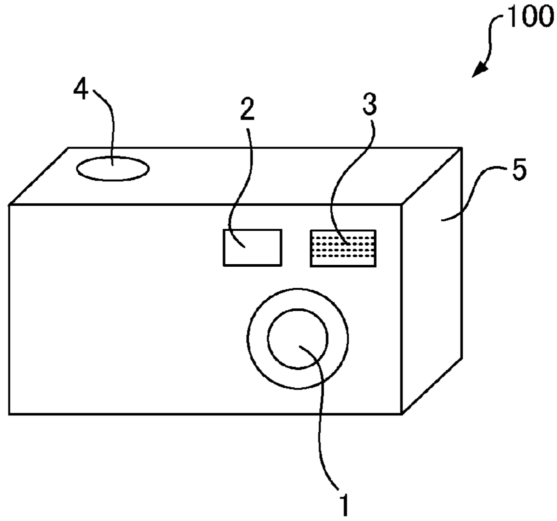


FIG. 2

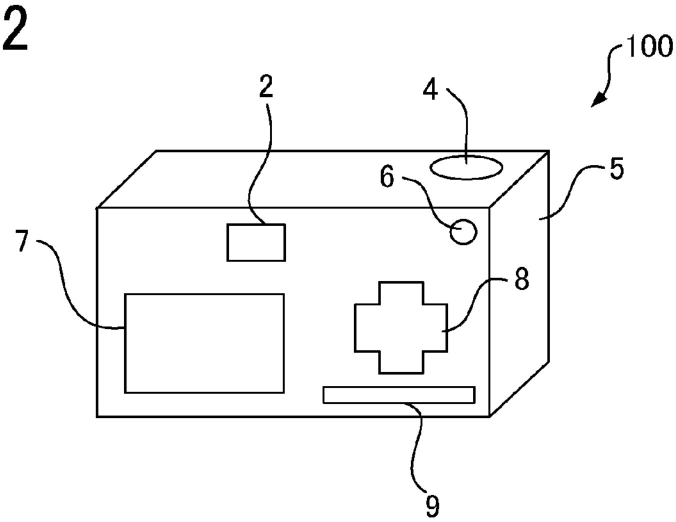


FIG. 3

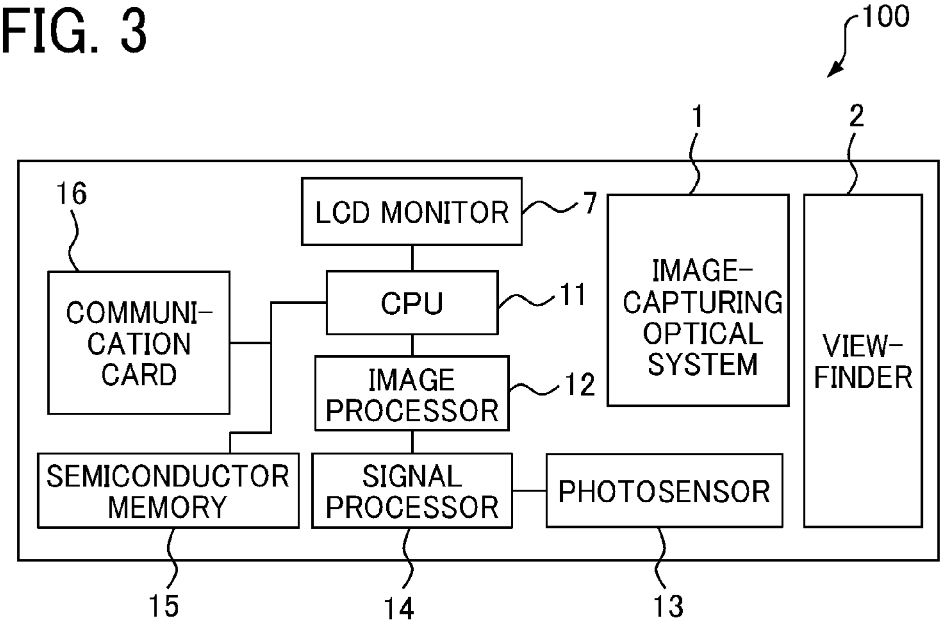

FIG. 4

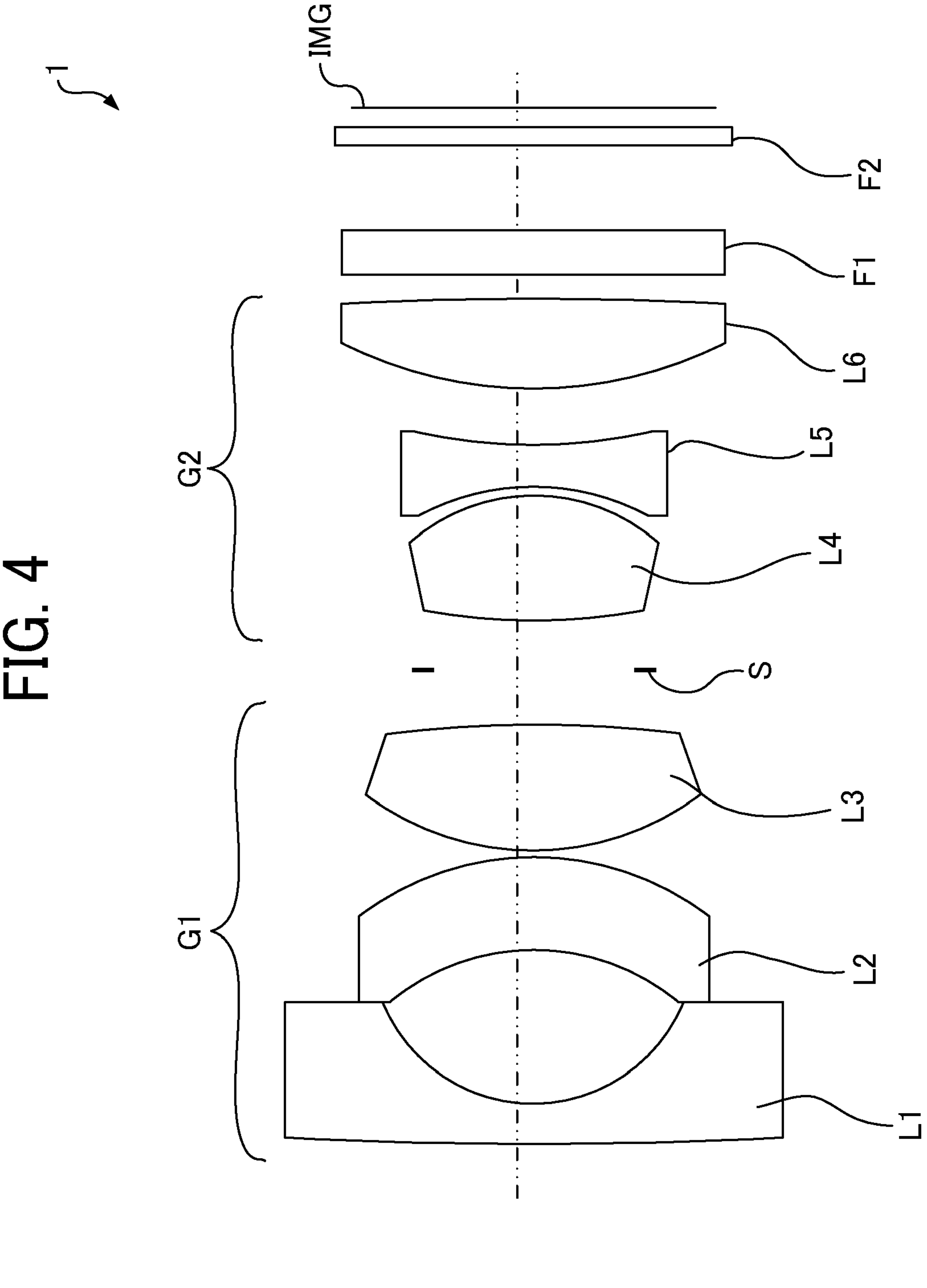

# FIG. 5

CONPARATIVE EXAMPLE

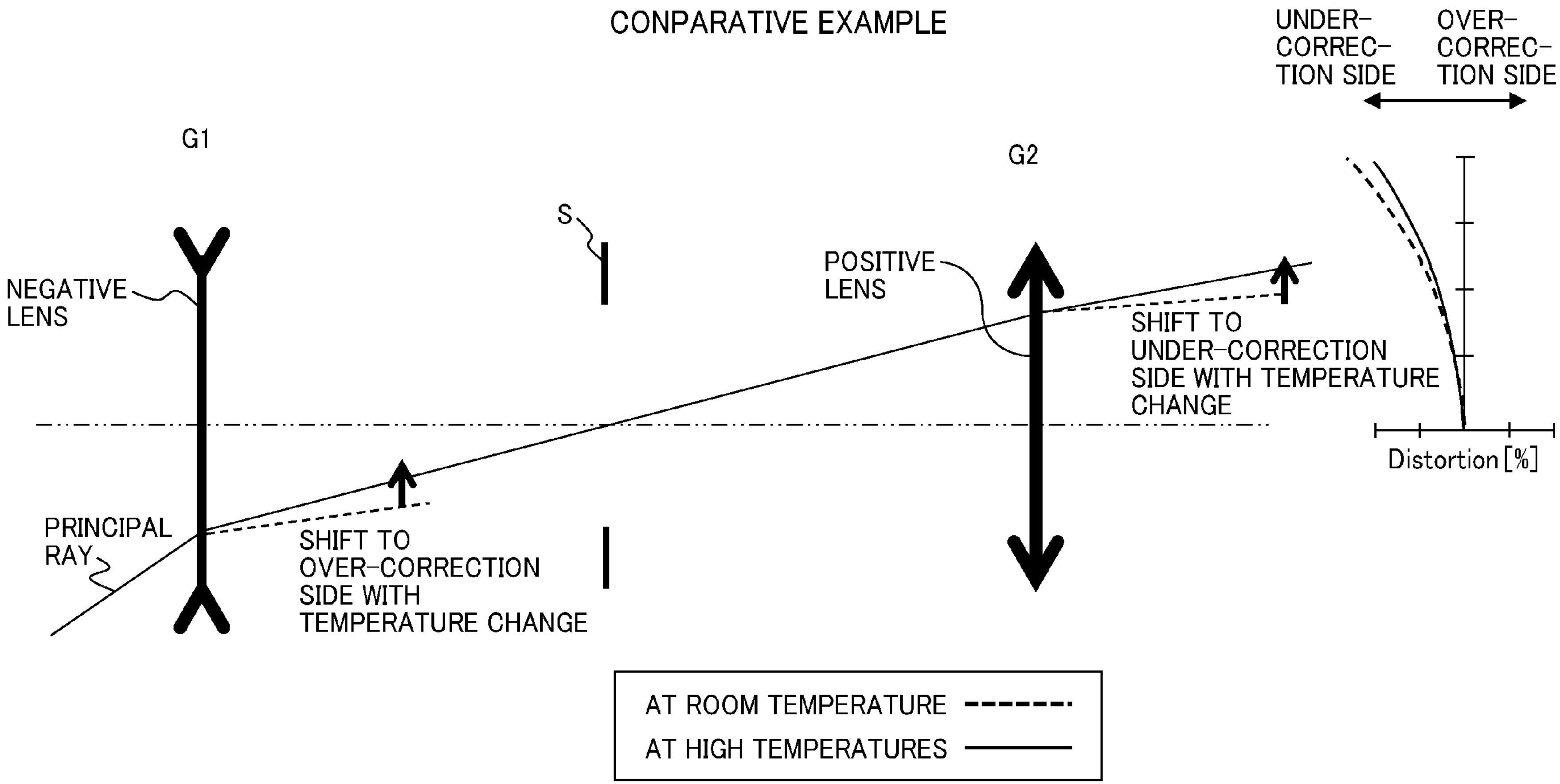

FIG. 6

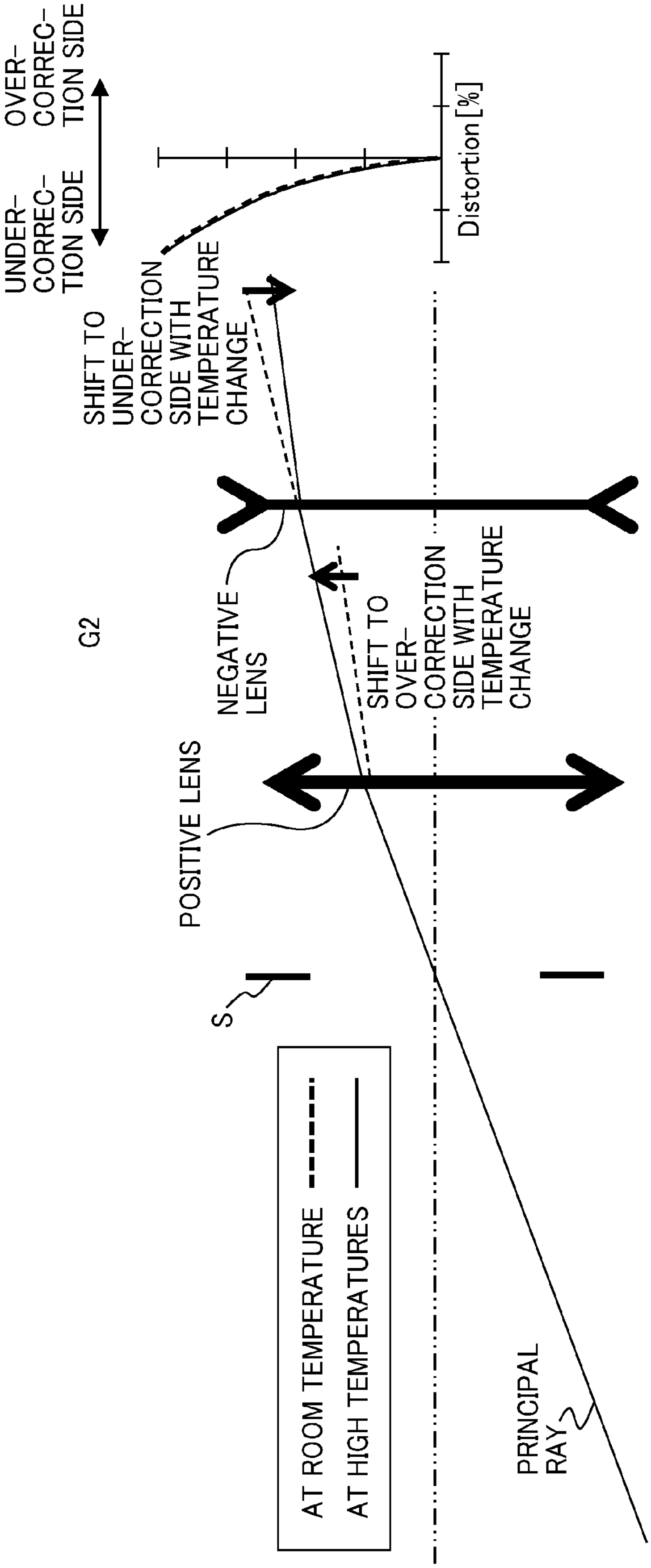
UNDER-CORREC-TION SIDE
OVER-CORREC-TION SIDE
Distortion [%]
SHIFT TO UNDER-CORRECTION SIDE WITH TEMPERATURE CHANGE
G2
NEGATIVE LENS
SHIFT TO OVER-CORRECTION SIDE WITH TEMPERATURE CHANGE
POSITIVE LENS
S
AT ROOM TEMPERATURE
AT HIGH TEMPERATURES
PRINCIPAL RAY

FIG. 7

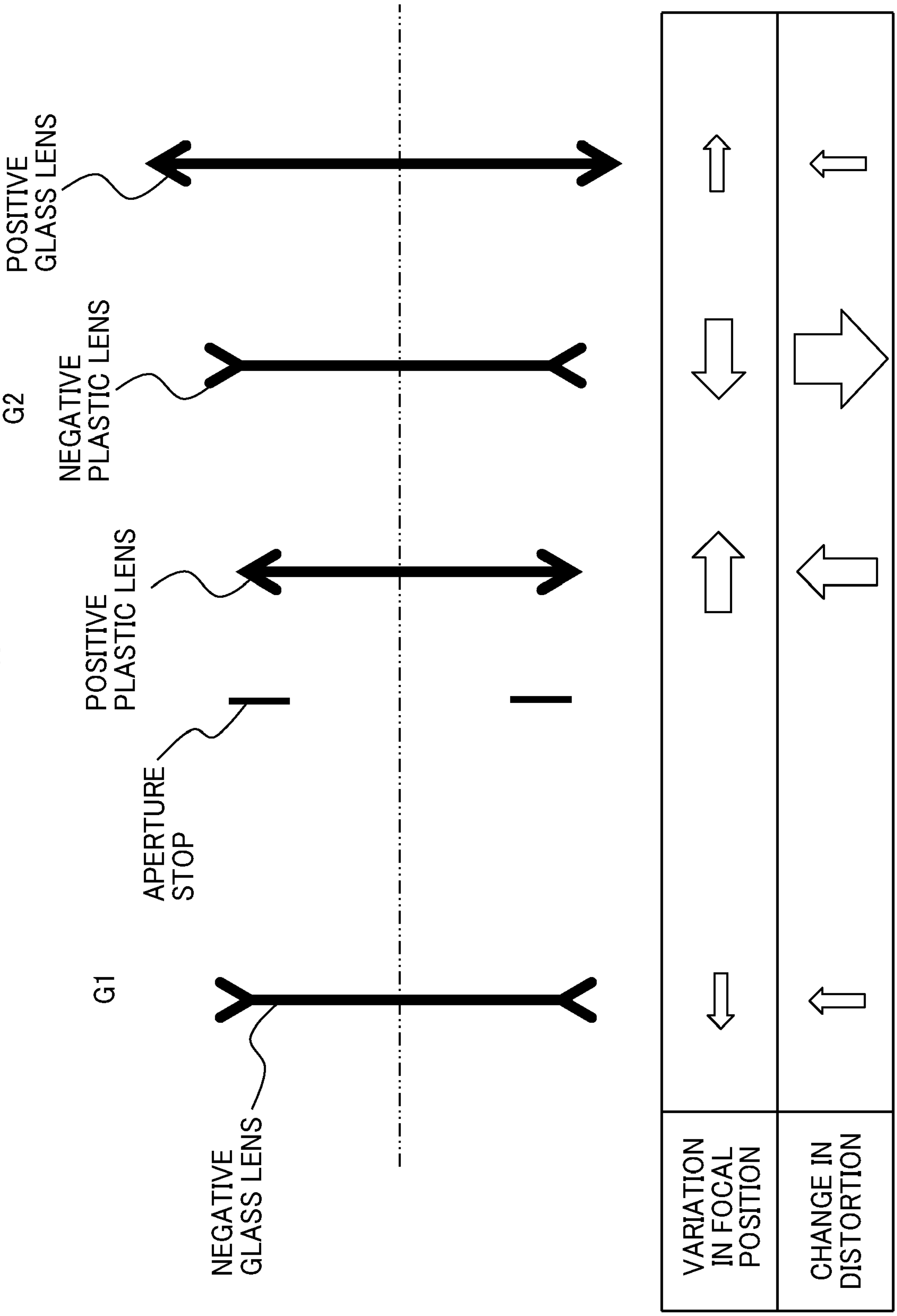
G1
G2
NEGATIVE GLASS LENS
APERTURE STOP
POSITIVE PLASTIC LENS
NEGATIVE PLASTIC LENS
POSITIVE GLASS LENS
VARIATION IN FOCAL POSITION
CHANGE IN DISTORTION

FIG. 8

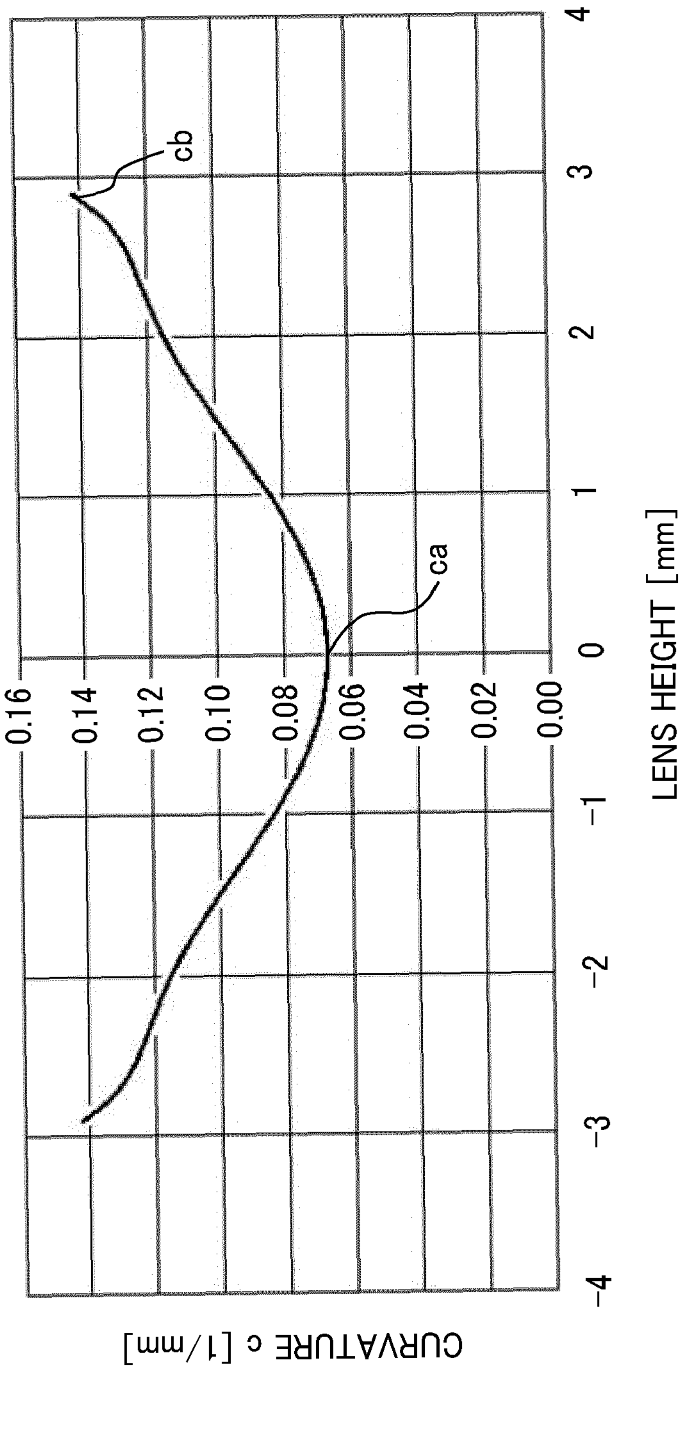
CURVATURE c [1/mm]
0.16
0.14
0.12
0.10
0.08
0.06
0.04
0.02
0.00
LENS HEIGHT [mm]
−4
−3
−2
−1
0
1
2
3
4
ca
cb

FIG. 9

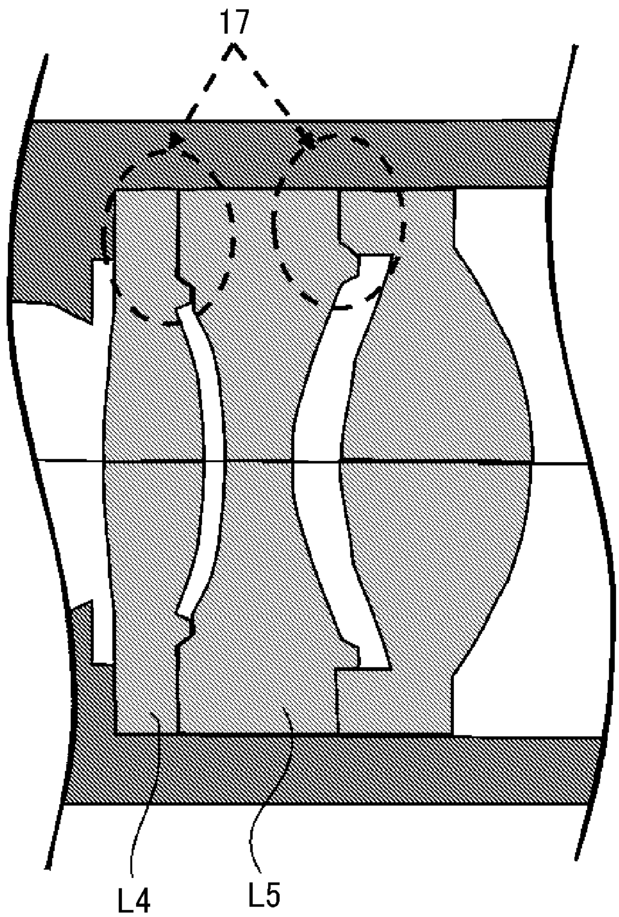

FIG. 10

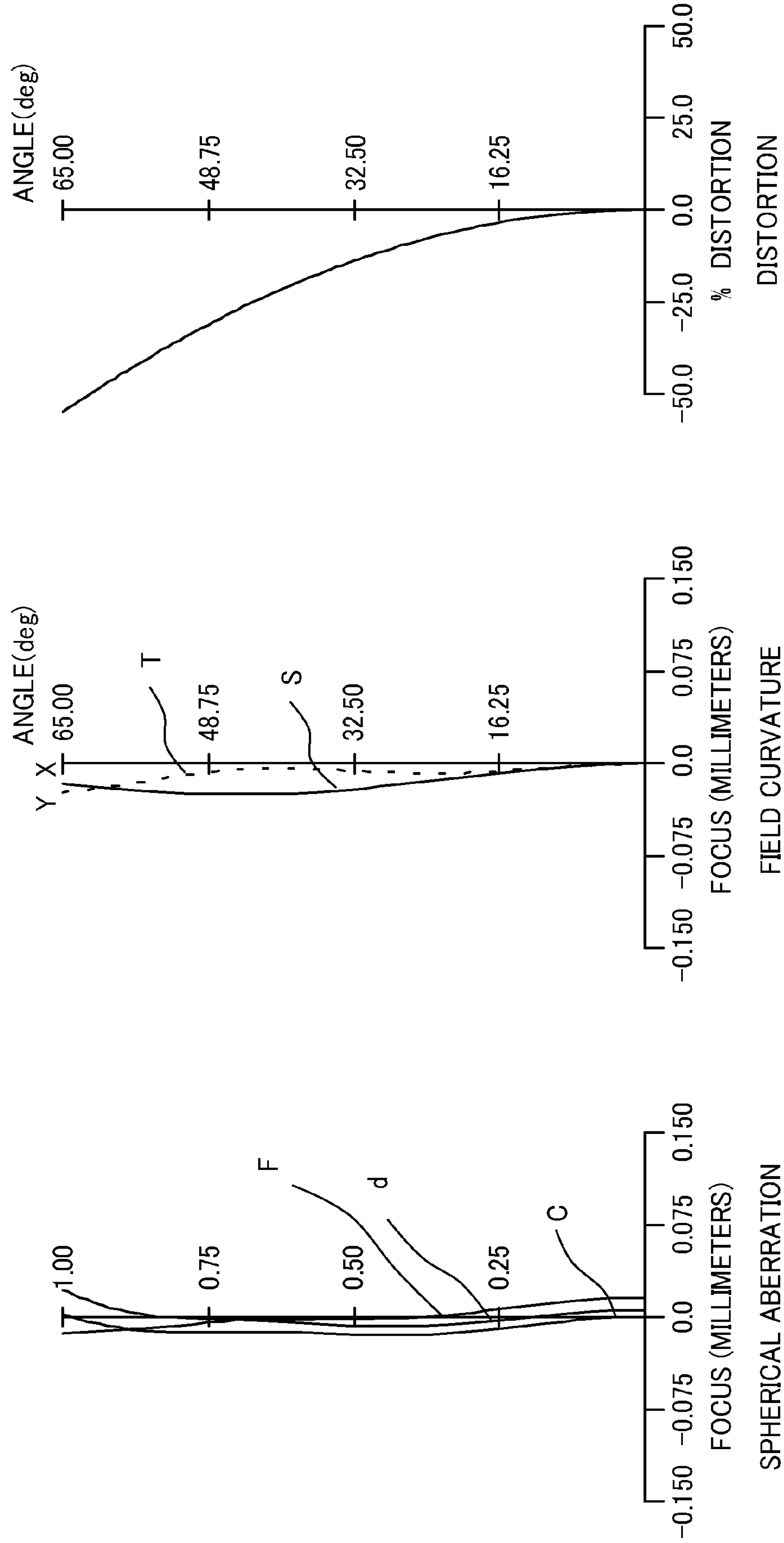
1.00
0.75
0.50
0.25
F
d
C
−0.150 −0.075 0.0 0.075 0.150
FOCUS (MILLIMETERS)
SPHERICAL ABERRATION
ANGLE(deg)
65.00
48.75
32.50
16.25
T
S
Y X
−0.150 −0.075 0.0 0.075 0.150
FOCUS (MILLIMETERS)
FIELD CURVATURE
ANGLE(deg)
65.00
48.75
32.50
16.25
−50.0 −25.0 0.0 25.0 50.0
% DISTORTION
DISTORTION

FIG. 11

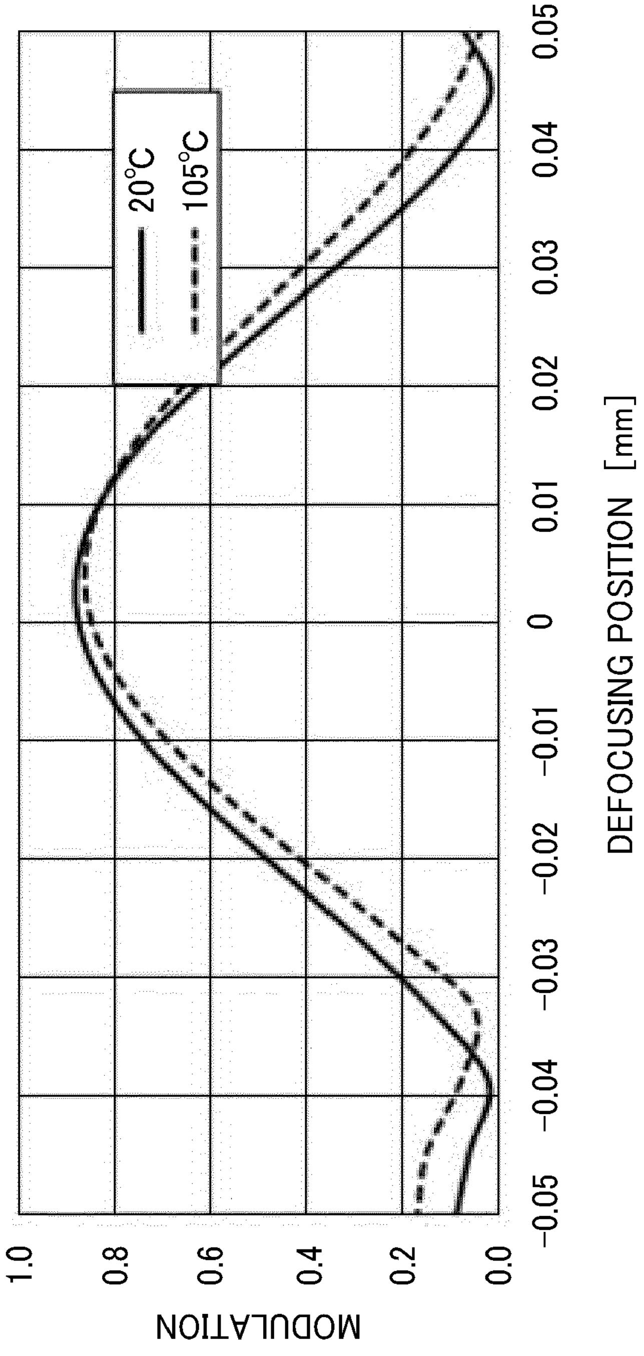
20°C
105°C
MODULATION
1.0
0.8
0.6
0.4
0.2
0.0
−0.05
−0.04
−0.03
−0.02
−0.01
0
0.01
0.02
0.03
0.04
0.05
DEFOCUSING POSITION [mm]

FIG. 12

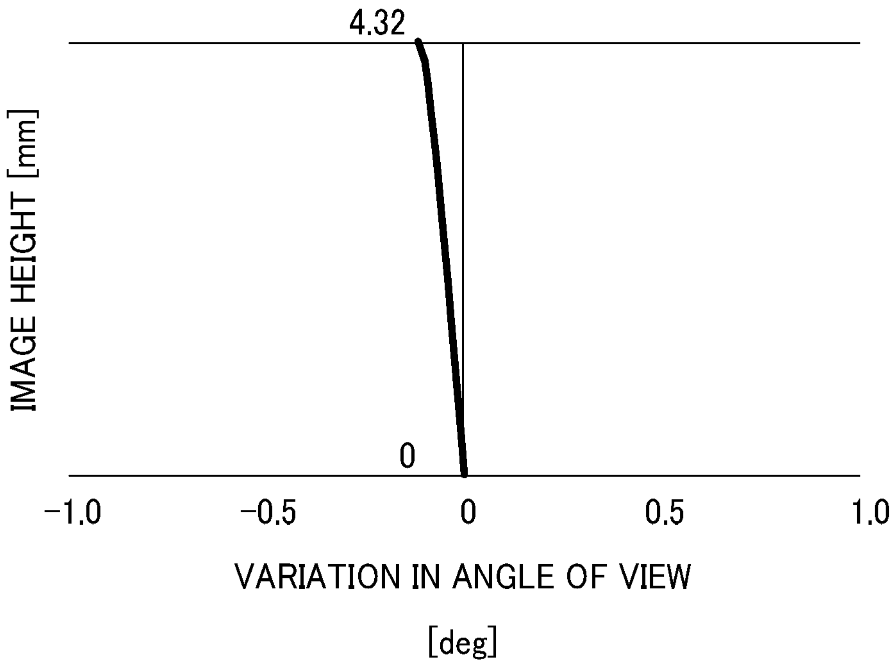
4.32
IMAGE HEIGHT [mm]
0
−1.0
−0.5
0
0.5
1.0
VARIATION IN ANGLE OF VIEW
[deg]

FIG. 13

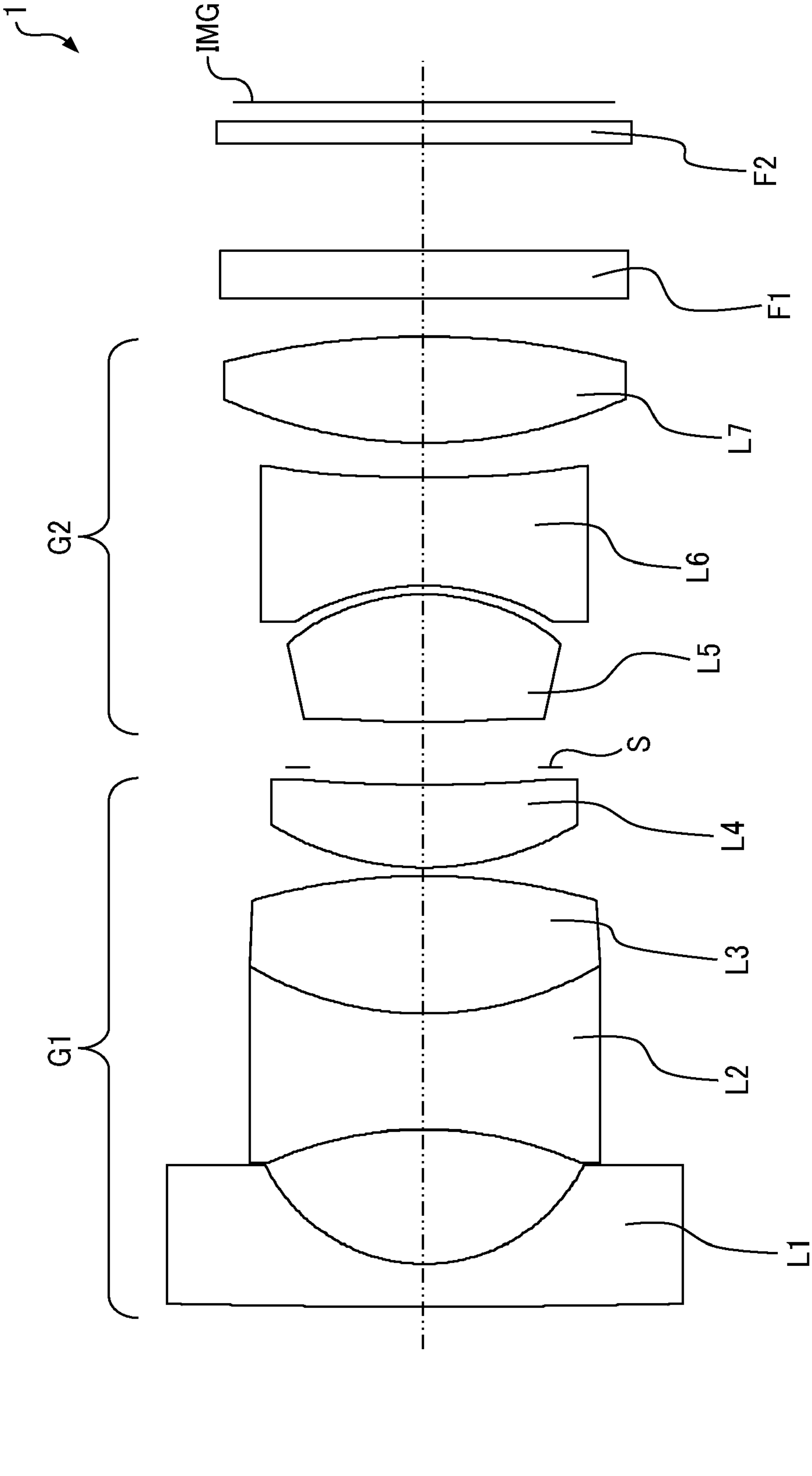

FIG. 14

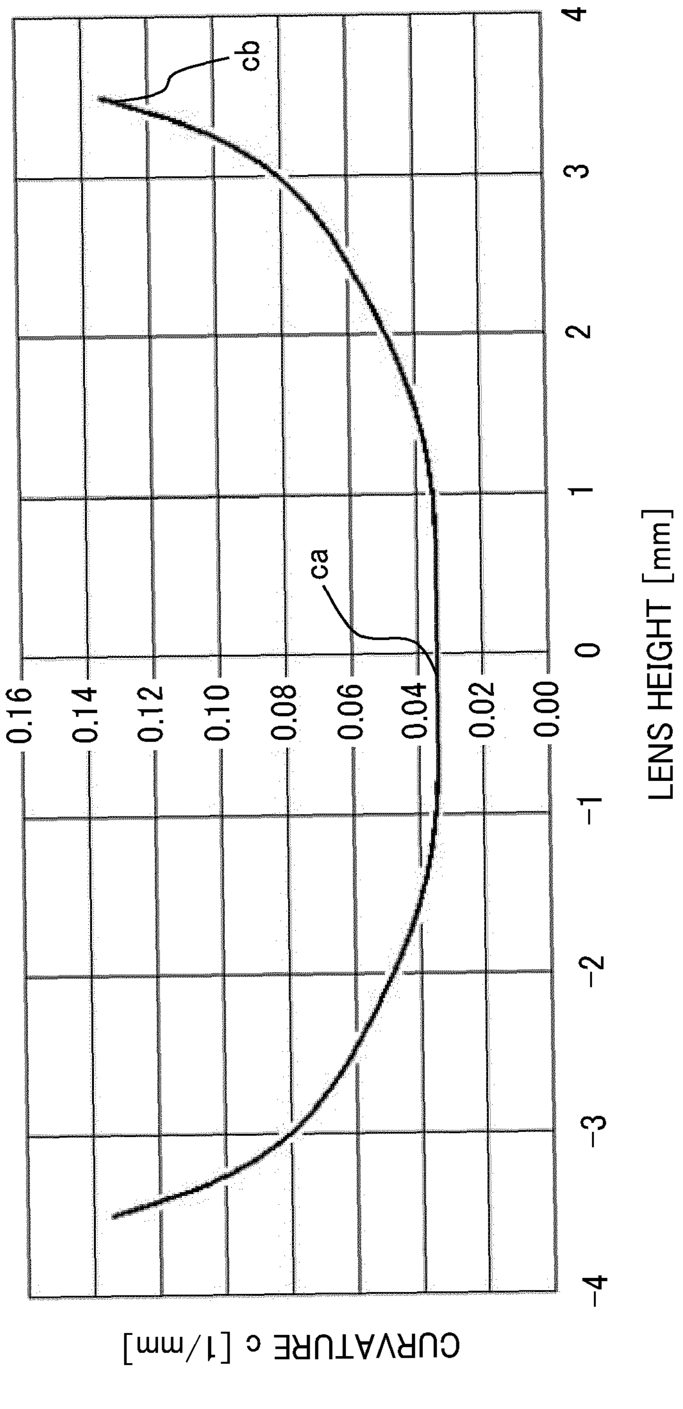

cb
ca
0.16
0.14
0.12
0.10
0.08
0.06
0.04
0.02
0.00
−4
−3
−2
−1
0
1
2
3
4
LENS HEIGHT [mm]
CURVATURE c [1/mm]

FIG. 15

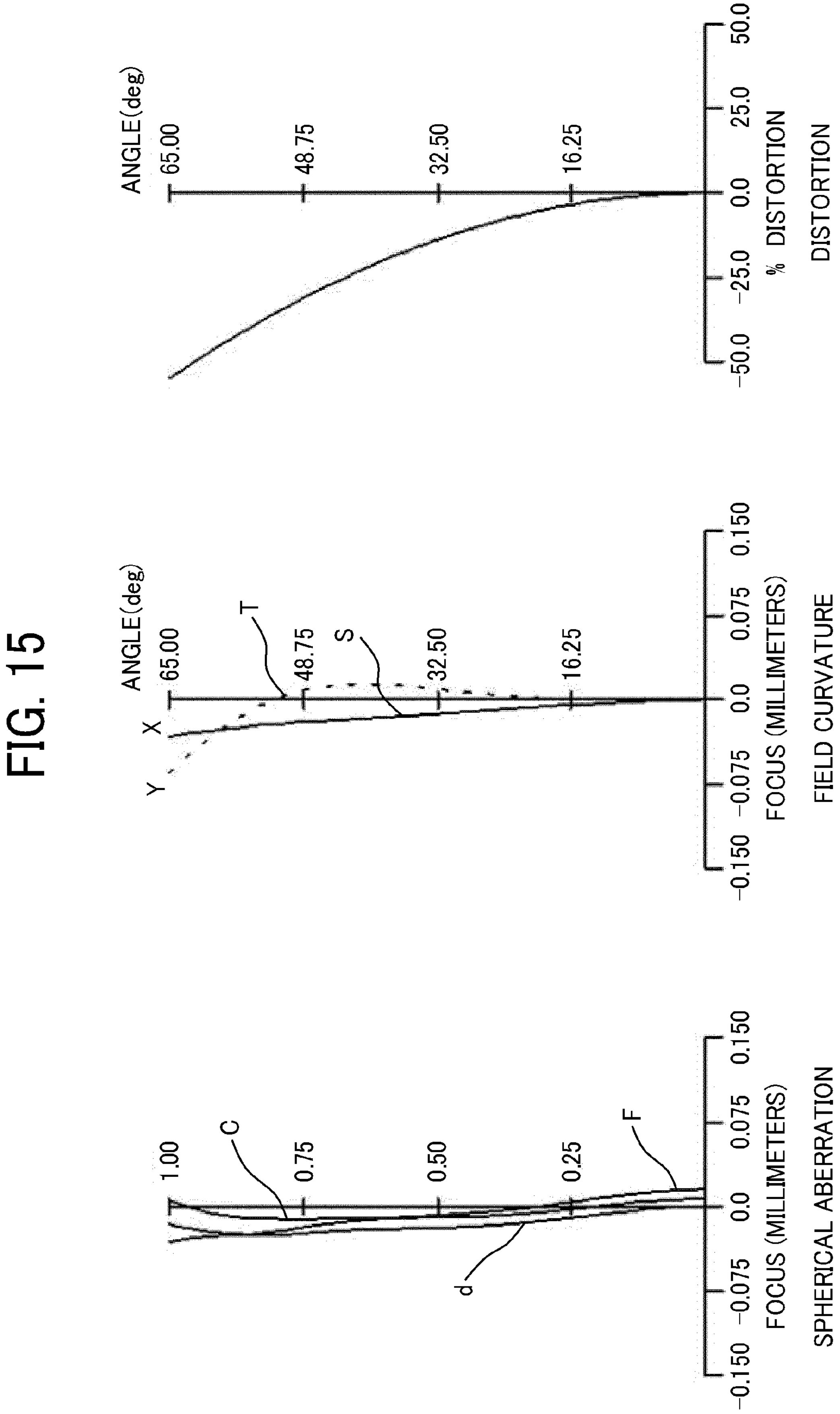
ANGLE(deg)
65.00
48.75
32.50
16.25
-50.0
-25.0
0.0
25.0
50.0
% DISTORTION
DISTORTION
Y
X
T
S
-0.150
-0.075
0.0
0.075
0.150
FOCUS (MILLIMETERS)
FIELD CURVATURE
1.00
0.75
0.50
0.25
C
F
d
SPHERICAL ABERRATION

FIG. 16

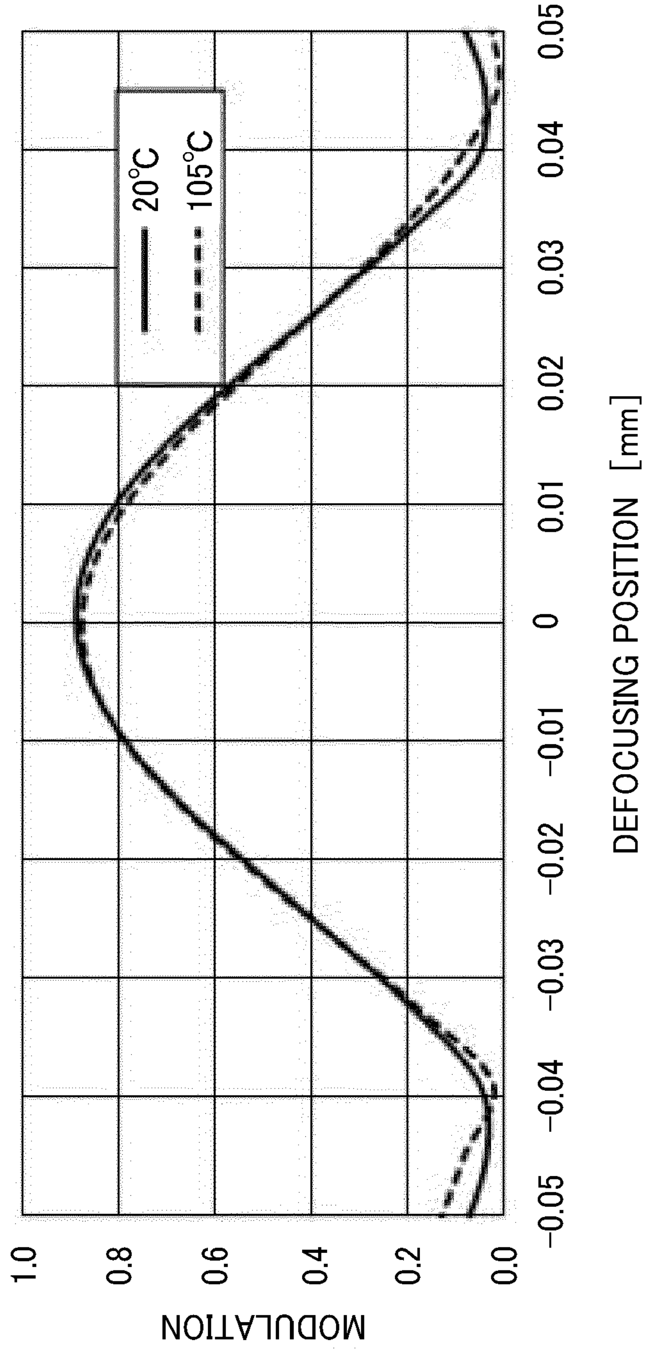

20°C
105°C
MODULATION
1.0
0.8
0.6
0.4
0.2
0.0
−0.05
−0.04
−0.03
−0.02
−0.01
0
0.01
0.02
0.03
0.04
0.05
DEFOCUSING POSITION [mm]

FIG. 17

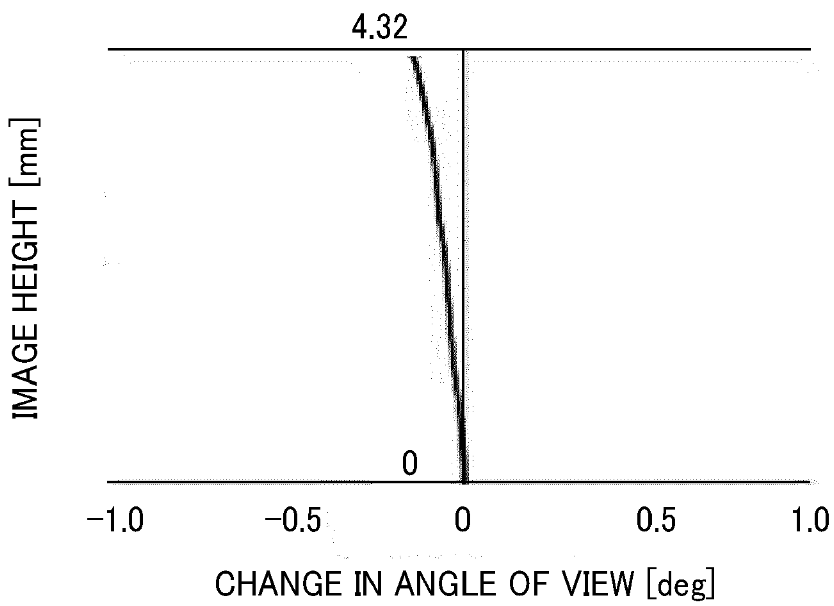

FIG. 18

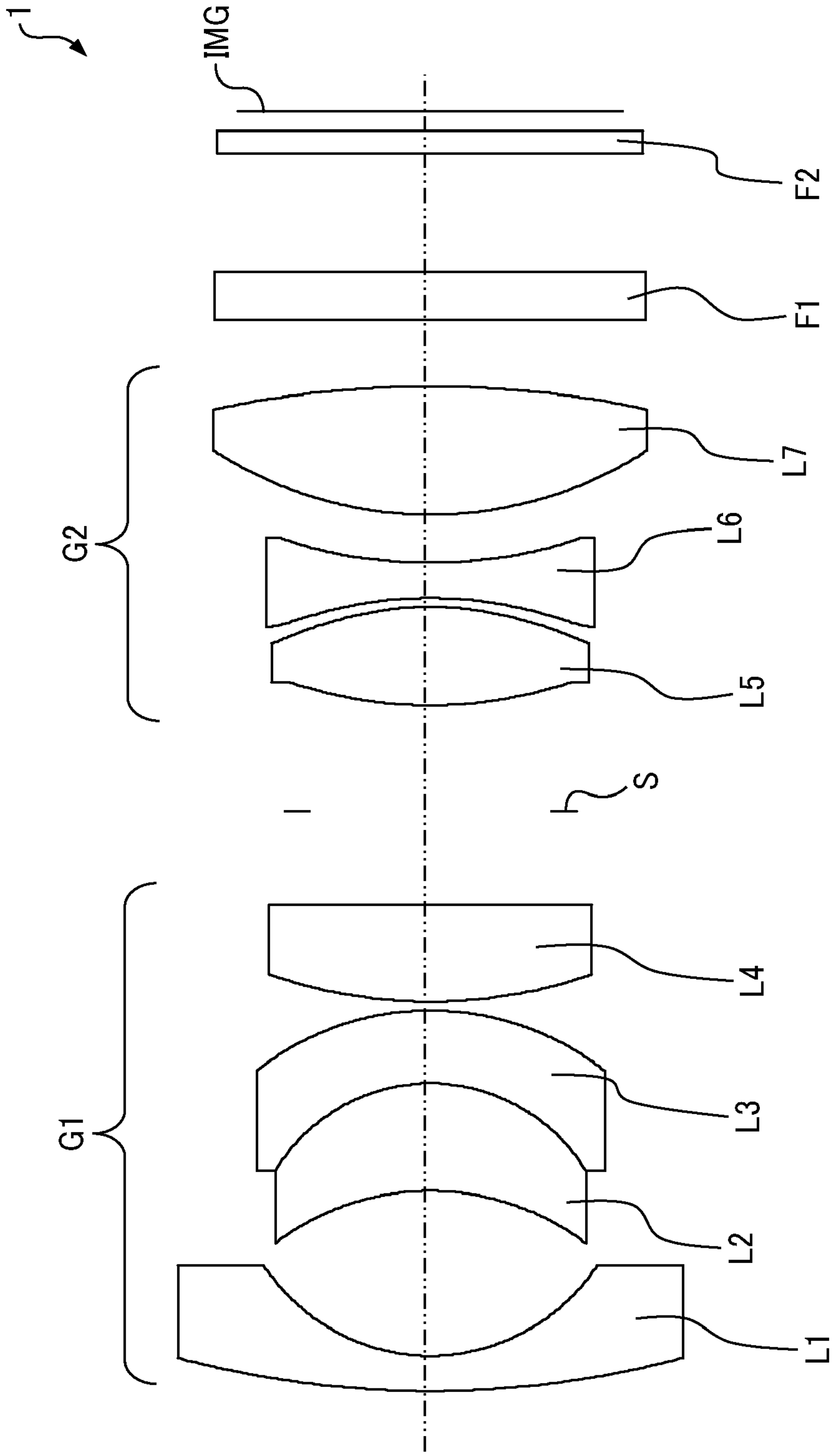

FIG. 19

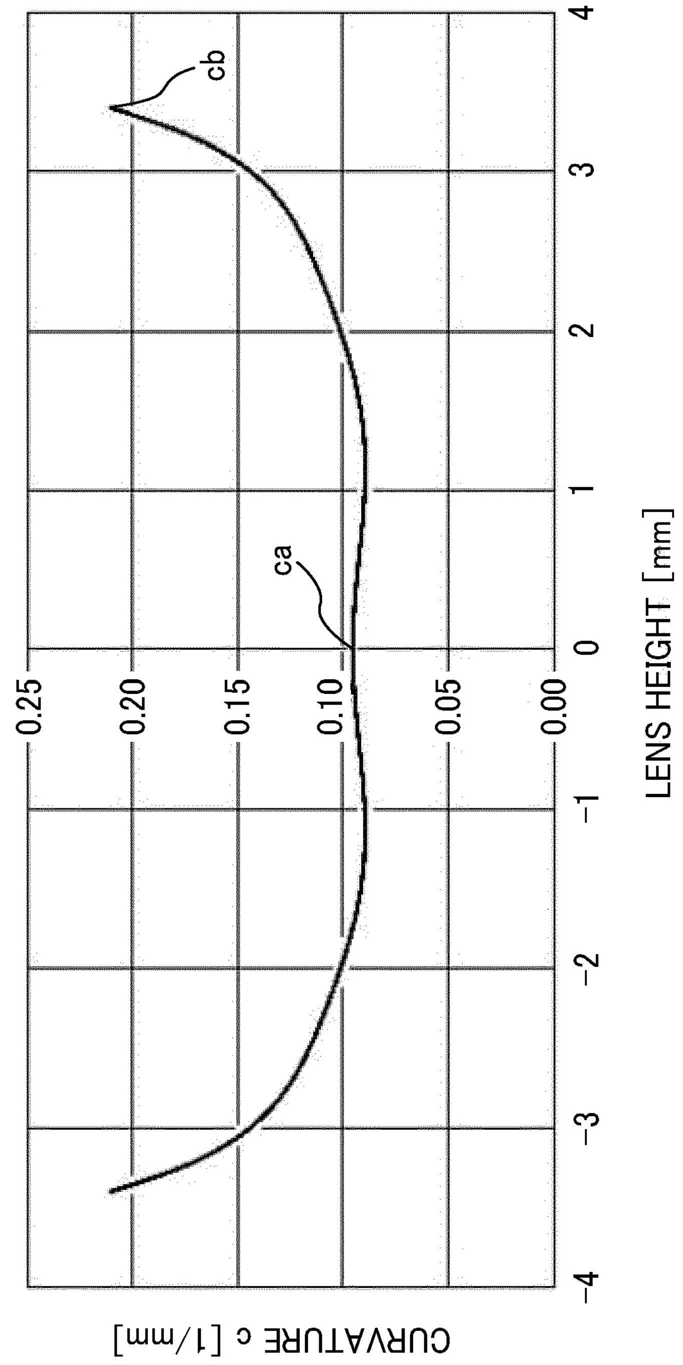
cb
ca
0.25
0.20
0.15
0.10
0.05
0.00
−4
−3
−2
−1
0
1
2
3
4
LENS HEIGHT [mm]
CURVATURE c [1/mm]

FIG. 20

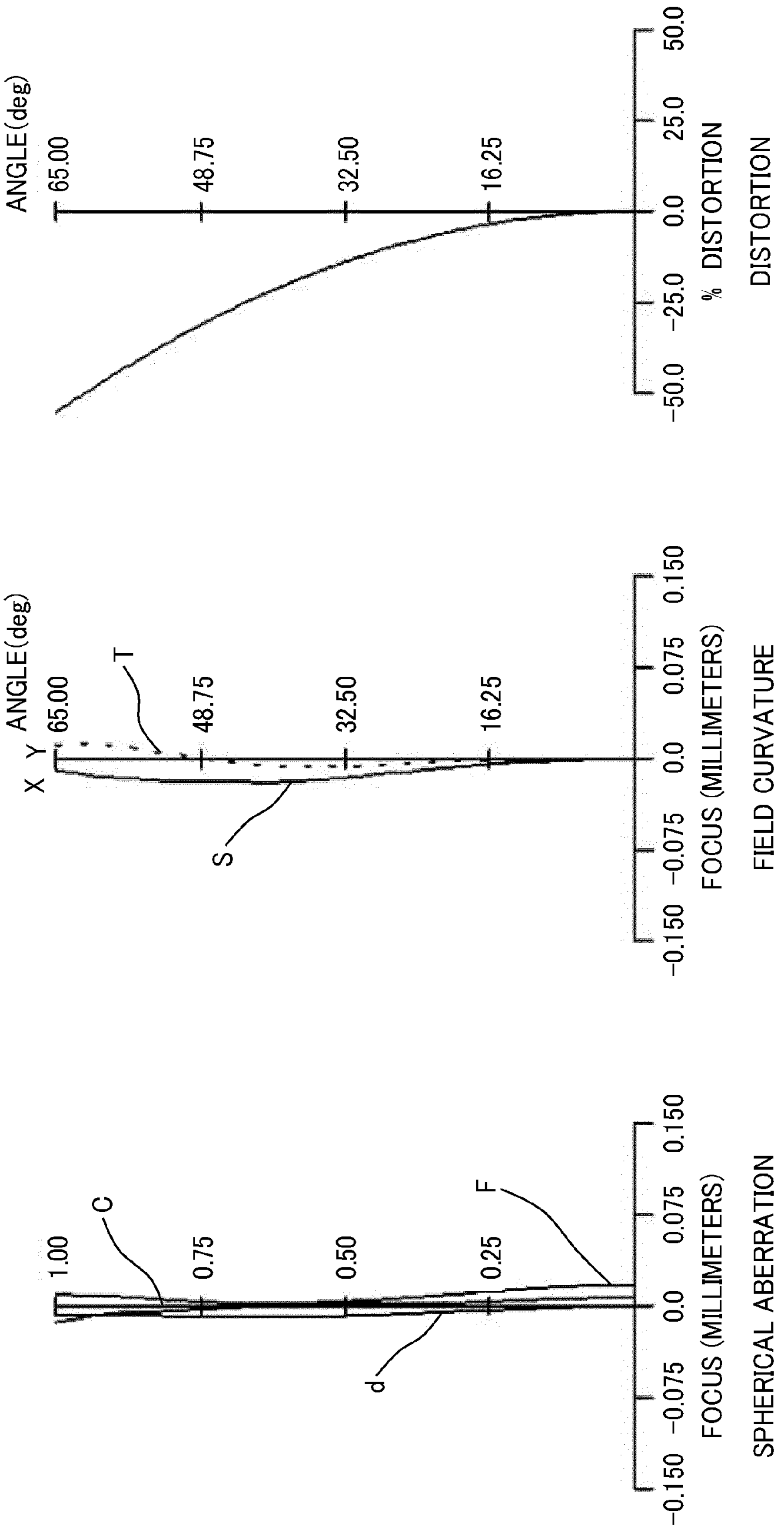
ANGLE (deg)
65.00
48.75
32.50
16.25
−50.0
−25.0
0.0
25.0
50.0
% DISTORTION
DISTORTION
ANGLE (deg)
X Y
T
S
−0.150
−0.075
0.075
0.150
FOCUS (MILLIMETERS)
FIELD CURVATURE
1.00
0.75
0.50
0.25
C
F
d
FOCUS (MILLIMETERS)
SPHERICAL ABERRATION

FIG. 21

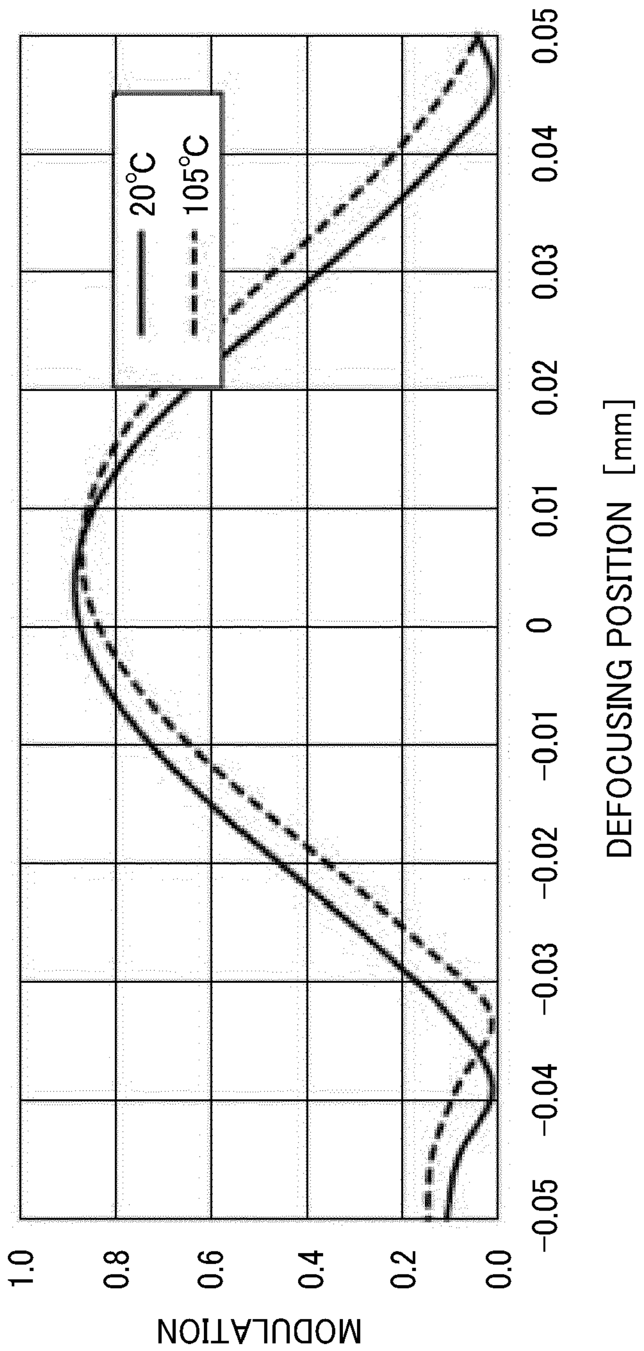
20°C
105°C
MODULATION
1.0
0.8
0.6
0.4
0.2
0.0
−0.05
−0.04
−0.03
−0.02
−0.01
0
0.01
0.02
0.03
0.04
0.05
DEFOCUSING POSITION [mm]

FIG. 22

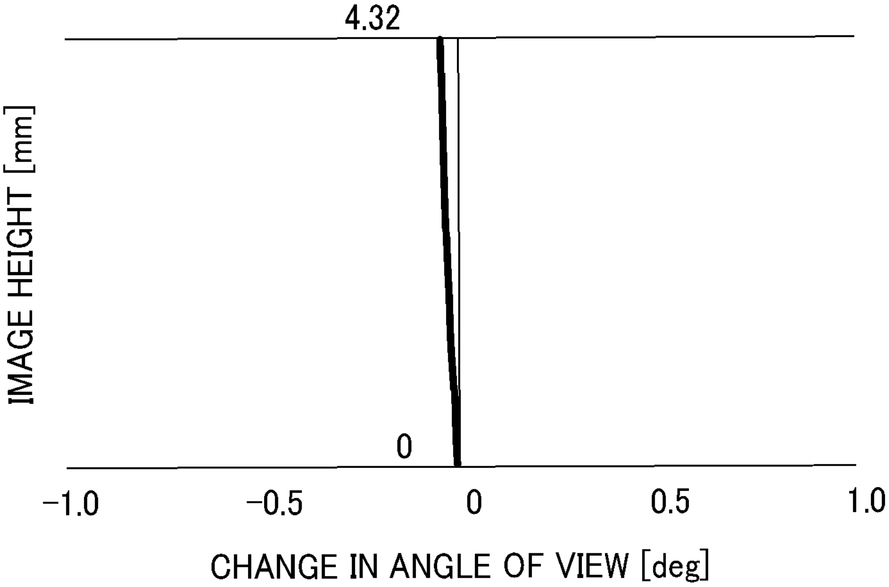
4.32
IMAGE HEIGHT [mm]
0
−1.0
−0.5
0
0.5
1.0
CHANGE IN ANGLE OF VIEW [deg]

FIG. 23

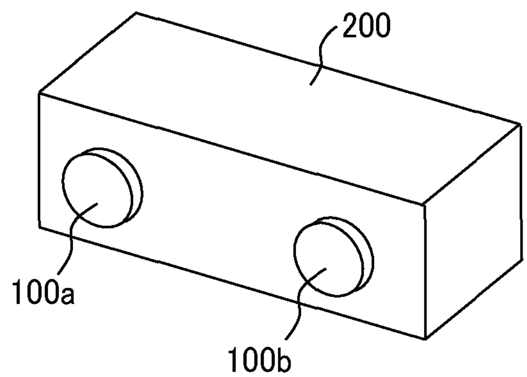
200
100a
100b

# FIG. 24

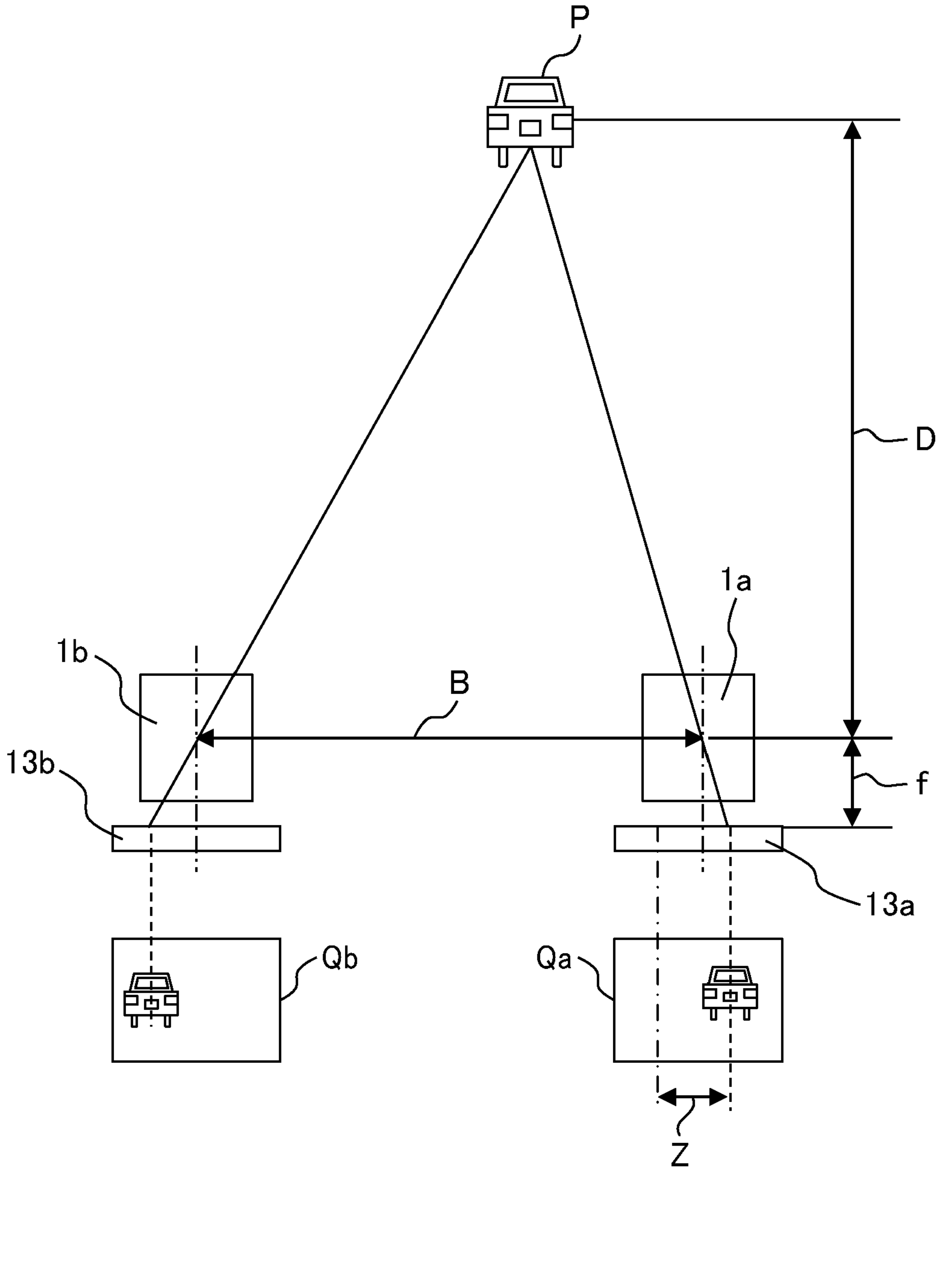

Europäisches Patentamt
European Patent Office
Office européen des brevets

# EUROPEAN SEARCH REPORT

Application Number
EP 21 21 7842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 107 664 826 A (LIAONING ZHONGLAN ELECTRONIC TECH CO LTD) 6 February 2018 (2018-02-06) * paragraph [0003] - paragraph [0069] * * figures 1, 2 * | 1-15 | INV. G02B9/04 |
| Y | CN 111 929 867 A (PHENIX OPTICS CO LTD) 13 November 2020 (2020-11-13) * paragraph [0003] - paragraph [0037] * * figures 1, 2 * | 1-15 | |
| Y | US 2007/217030 A1 (MURAMATSU AKIHIRO [JP] ET AL) 20 September 2007 (2007-09-20) * paragraph [0011] - paragraph [0096] * * figures 1, 3 * | 1-15 | |
| A | EP 3 764 146 A1 (RICOH CO LTD [JP]) 13 January 2021 (2021-01-13) * paragraph [0010] - paragraph [0092] * * figures 1, 3, 7, 13, 19 * | 1-15 | |
| | | | TECHNICAL FIELDS SEARCHED (IPC) |
| | | | G02B<br>G03B<br>H04N |

The present search report has been drawn up for all claims

| Place of search | Date of completion of the search | Examiner |
|---|---|---|
| The Hague | 15 August 2022 | Szachowicz, Marta |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 21 7842

This annex lists the patent family members relating to the patent documents cited in the above-mentioned European search report. The members are as contained in the European Patent Office EDP file on
The European Patent Office is in no way liable for these particulars which are merely given for the purpose of information.

15-08-2022

| Patent document cited in search report | | Publication date | Patent family member(s) | | Publication date |
|---|---|---|---|---|---|
| CN 107664826 | A | 06-02-2018 | NONE | | |
| CN 111929867 | A | 13-11-2020 | NONE | | |
| US 2007217030 | A1 | 20-09-2007 | CN 1954248 | A | 25-04-2007 |
| | | | JP WO2005111688 | A1 | 27-03-2008 |
| | | | KR 20070012461 | A | 25-01-2007 |
| | | | US 2007217030 | A1 | 20-09-2007 |
| | | | WO 2005111688 | A1 | 24-11-2005 |
| EP 3764146 | A1 | 13-01-2021 | EP 3764146 | A1 | 13-01-2021 |
| | | | JP 2021012311 | A | 04-02-2021 |
| | | | US 2021011249 | A1 | 14-01-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014089349 A
- JP 2018097150 A